(19) Europäisches Patentamt
European Patent Office
Office européen des brevets

(11) **EP 1 711 800 B1**

(12) **EUROPÄISCHE PATENTSCHRIFT**

(45) Veröffentlichungstag und Bekanntmachung des Hinweises auf die Patenterteilung:
**29.08.2007 Patentblatt 2007/35**

(21) Anmeldenummer: **05716497.2**

(22) Anmeldetag: **01.04.2005**

(51) Int Cl.:
***G01N 23/06*** (2006.01)

(86) Internationale Anmeldenummer:
**PCT/EP2005/003447**

(87) Internationale Veröffentlichungsnummer:
**WO 2005/095933 (13.10.2005 Gazette 2005/41)**

(54) **VERFAHREN UND VORRICHTUNG ZUR BESTIMMUNG EINES OBJEKTMATERIALS**

METHOD AND DEVICE FOR DETERMINING THE MATERIAL OF AN OBJECT

PROCEDE ET DISPOSITIF DE DETERMINATION D'UN MATERIAU D'OBJET

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **02.04.2004 DE 102004017149**

(43) Veröffentlichungstag der Anmeldung:
**18.10.2006 Patentblatt 2006/42**

(73) Patentinhaber: **Fraunhofer-Gesellschaft zur Förderung der angewandten Forschung e.V. 80686 München (DE)**

(72) Erfinder:
- **KOSTKA, Günther**
  **91056 Erlangen (DE)**
- **SCHMITT, Peter**
  **91058 Erlangen (DE)**
- **JOBST, Andreas**
  **90491 Nürnberg (DE)**

(74) Vertreter: **Schenk, Markus et al Patentanwälte Schoppe, Zimmermann Stöckeler & Zinkler Postfach 246 82043 Pullach (DE)**

(56) Entgegenhaltungen:
GB-A- 2 365 522        US-A- 5 838 758
US-A1- 2004 197 234

- BLAKE G M ET AL: "DUAL ENERGY X-RAY ABSORPTIOMETRY: THE EFFECTS OF BEAM HARDENING ON BONE DENSITY MEASUREMENTS" MEDICAL PHYSICS, AMERICAN INSTITUTE OF PHYSICS. NEW YORK, US, Bd. 19, Nr. 2, 1. März 1992 (1992-03-01), Seiten 459-465, XP000291141 ISSN: 0094-2405

**Beschreibung**

Die vorliegende Erfindung bezieht sich auf die Bestimmung eines Objektmaterials, wie sie z.B. zur industriellen Sortierung von Materialien verwendet wird. Eine solche Sortierung findet beispielsweise bei der Trennung von verschiedenartigen Aluminiumlegierungen aus der Kfz-Schrottverwertung statt.

Bei der Wiederverwertung von Altmaterialien, wie z.B. von Metall-Legierungen aus Kfz-Schredder-Betrieben, besteht die Notwendigkeit, Materialtrennungsverfahren einzusetzen, da nur sortenreine Materialien einen nennenswerten Marktwert erzielen. Für die Trennung von Metallen von Nichtmetallen sind effektive Methoden bekannt und im Einsatz. Ebenso werden Methoden zur Trennung von magnetischen und von nichtmagnetischen Metall-Legierungen eingesetzt. Für die Trennung von verschiedenen Leichtmetall-Legierungen, beispielsweise Aluminium- oder Magnesium-Legierungen, die sich nur durch den prozentualen Anteil der Legierungsbestandteile unterscheiden, sind hingegen keine oder keine genügend zuverlässigen Verfahren im industriellen Einsatz. Mit dem zunehmenden Trend zum Kfz-Leichtbau besteht verstärkt die Notwendigkeit für ein zuverlässiges Unterscheidungsverfahren für diese Materialien.

Eine bisherige Möglichkeit zur Erkennung unterschiedlicher Typen von Leichtmetall-Legierungen basiert hauptsächlich auf optischen Verfahren. Dabei werden die Oberflächenfarbe und der Oberflächenreflexionsgrad sowie eine charakteristische Form der Schredderteile analysiert und bestimmten Materialtypen zugeordnet. Ein mögliches Trennungsverfahren zur nachfolgenden Separation der Materialien besteht beispielsweise in der Verwendung mechanischer Stöße oder von Luftdruckdüsen. Da aber die Oberflächenfarbe von geschredderten Metallteilen aufgrund von möglicher Verschmutzung oder sonstigen Einflüssen keine zuverlässige, konstante Eigenschaft ist, führt eine rein optische Auswertung mit hoher Wahrscheinlichkeit zu einer hohen Falsch-Klassifizierung und damit Falsch-Sortierung.

In jüngerer Zeit wurden deshalb Unterscheidungsverfahren vorgeschlagen, die auf der kombinierten Auswertung von optischen Eigenschaften und Röntgentransmissionsintensitäten basieren. In der Offenlegungsschrift WO 02/50521 A2 wird der Einsatz eines Mehrenergie-Verfahrens zur Separation von verschiedenen Materialien beschrieben. Dabei werden die auf einem Fließband bewegten Objekte nacheinander mittels mehrerer Anordnungen von Röntgenquellen und Zeilendetektoren bei unterschiedlichen Röntgenlinien bzw. Energien bzw. Wellenlängen untersucht bzw. durchstrahlt und bezüglich der materialspezifischen Eigenschaft durch nachfolgende Signalverarbeitung analysiert. In der Signalauswertung wird davon ausgegangen, dass die charakteristische Bewertungsgröße, nämlich der Quotient Q des Schwächungskoeffizienten $\mu$ an den unterschiedlichen Strahlungsenergien lediglich materialabhängig ist. Die Materialbestimmung wird folglich allein aufgrund des Verhältnisses Q des Absorptionskoeffizienten $\mu$ bei einem ersten Durchstrahlungsenergiepegel zu dem Absorptionskoeffizienten $\mu$ bei einem unterschiedlichen Durchstrahlungsenergiepegel bestimmt.

Nachteilhaft an der in der WO 02/50521 A2 vorgeschlagenen Vorgehensweise ist, dass bei der Auswertung des Durchstrahlungsbildes ein monochromatisches effektives Durchstrahlungsspektrum verwendet wird. Monoenergetische Röntgenquellen umfassen beispielsweise Isotopenstrahler. Sie können auch durch den kombinierten Einsatz von Röntgenröhren oder Synchrotron-Vorrichtungen mit Monochromatoren realisiert werden. Diese monochromatischen Röntgenquellen weisen jedoch eine Reihe von spezifischen Nachteilen auf, die die Möglichkeiten ihres Einsatzes im industriellen Maßstab sehr stark einschränken. Der Einsatz von Synchrotron-Strahlung scheidet im allgemeinen für den industriellen Einsatz aus. Monochromatisierte Röntgenquellen weisen eine vergleichsweise geringe Strahlungsintensität auf, was zu ungünstig langen Messdauern und geringem Durchsatz führt.

Ferner ist es aus der Offenlegungsschrift US-A-5 838 758 bekannt, Intensitäts-messungen mit zwei unterschiedlichen polychromatischen Röntgenstrahlungen und zur Bestimmung eines Objektmaterials einen Quotienten zu bilden.

Es besteht deshalb ein Bedarf nach einem Bestimmungsschema für Objektmaterialien, das einerseits eine schnellere, kostengünstigere und, allgemein ausgedrückt, unaufwändigere Bestimmung ermöglicht und andererseits trotzdem eine ausreichende Klassifizierungsgenauigkeit zur Trennung von verschiedenen Leichtmetall-Legierungen liefert.

Die Aufgabe der vorliegenden Erfindung besteht deshalb darin, ein Bestimmungsschema für Objektmaterialien zu schaffen, das eine unaufwändigere Objektmaterialbestimmung bei gleichzeitig hoher Klassifizierungsgenauigkeit, insbesondere auch im Hinblick auf Leichtmetall-Legierungen, ermöglicht.

Diese Aufgabe wird durch eine Vorrichtung gemäß Anspruch 1 und ein Verfahren gemäß Anspruch 17 gelöst.

Ein erfindungsgemäßes Verfahren zur Bestimmung eines Objektmaterials, aus dem ein Objekt besteht, umfasst das Bestrahlen des Objekts und Empfangen einer sich ergebenden durch das Objekt transmittierten oder von dem Objekt reflektierten Strahlung mit einem ersten polyfrequenten effektiven bzw. effektiv wirkenden Spektrum, um einen ersten Intensitätswert zu erhalten; das Bestrahlen des Objekts und Empfangen bzw. Detektieren einer sich ergebenden durch das Objekt transmittierten oder von dem Objekt reflektierten Strahlung mit einem zweiten polyfrequenten effektiven Spektrum, um einen zweiten Intensitätswert zu erhalten, wobei sich das erste polyfrequente effektive Spektrum von dem zweiten polyfrequenten effektiven Spektrum unterscheidet; sowie das Bereitstellen von Referenzdaten für eine Mehrzahl von vorbestimmten Materialien. Schließlich wird das Objektmaterial einem der vorbestimmten Materialien anhand der Referenzdaten, eines auf dem ersten und dem zweiten Intensitätswert basierenden Kombinationswertes sowie zumindest des ersten oder zweiten Intensitätswerts zugeordnet. Die Referenzdaten können aus Probemessungen an Proben der bekannten vorbestimmten Materialien oder aus Simulationen oder Berechnungen gewonnen worden sein.

Eine Erkenntnis der vorliegenden Erfindung besteht darin, dass zwar durch Verwendung einer Strahlung mit einem polyfrequenten effektiven Spektrum zur Untersuchung des Objektes eine Strahlaufhärtung oder Spektrumsschwerpunktverschiebung dazu führt, dass der effektiv wirksame Absorptionskoeffizient oder Schwächungskoeffizient bzw. der effektive Wirksame Reflexionskoeffizient des Objektmaterials und damit insbesondere auch das Verhältnis zweier Koeffizienten zu unterschiedlichen Strahlungsspektren nicht mehr allein für das Material spezifisch ist sondern auch von der Dicke abhängt, dass dies aber in kauf genommen werden kann und trotzdem noch eine genaue Klassifizierung des Objektmaterials vorgenommen werden kann, indem zusätzlich zu dem Verhältnis der Absorptions- bzw. Reflektionskoeffizienten einer der sich bei den Bestrahlungen ergebenden Intensitätswerte herangezogen wird, um anhand von Referenzdaten eine Zuordnung zu einem aus einer Mehrzahl von vorbestimmten Materialien vorzunehmen.

Anders ausgedrückt besteht der Kerngedanke der vorliegenden Erfindung in folgenden Überlegungen. Eine notwendige Voraussetzung für die Annahme aus der oben gewürdigten WO 02/50521 A2, die charakteristische Bewertungsgröße, nämlich der Quotient des Schwächungskoeffizienten der unterschiedlichen Strahlungsenergien, sei nur Material- nicht aber Dickenabhängig, ist, dass das Spektrum der transmittierten Röntgenstrahlung nicht von der durchstrahlten Dicke der Objekte abhängt. Dies ist nämlich nur dann der Fall, wenn die Strahlungsquellen monoenergetische Röntgenstrahlung liefern. Ansonsten kommt es zur sogenannten Strahlaufhärtung mit zunehmender Durchstrahlungsdicke. Anders ausgedrückt ist bei Einsatz von industriellen Röntgenquellen ohne Monochromator die Voraussetzung der Konstanz des Koeffizienten des Schwächungskoeffizienten Q nicht gegeben. Stattdessen kommt es zu einer sogenannten Strahlaufhärtung der vom Detektor aufgenommenen Röntgenstrahlung. Dabei steigt nämlich mit zunehmender Durchstrahlungslänge bzw. -tiefe aufgrund des höheren Durchdringungsvermögens der Anteil von beispielsweise höherenergetischer Röntgenstrahlung im Verhältnis zum Anteil an niederenergetischer Strahlung an. Dadurch kommt es zu einer Verschiebung des effektiven Schwächungskoeffizienten für die jeweiligen Messungen bei unterschiedlicher durchstrahlter Dicke und somit zu einer Dickenabhängigen Verschiebung des Absorptionskoeffizient-Quotienten Q. Dies führt dazu, dass verschiedene Materialien ein und demselben Q-Wert zugeordnet werden können, und dadurch nicht mehr eindeutig separiert werden können. Das ist besonders nachteilig bei der Separation von sehr ähnlichen Metall-Legierungen, die sich nur durch die Menge und Art der Beimischungen unterscheiden, beispielsweise bei der Trennung von Guss-Aluminium- und Knet-Aluminium-Legierungen, die beide gleichzeitig aus den Kfz-Schredder-Betrieben bereitgestellt werden, die aber nur getrennt voneinander wieder verwertet werden können.

Gemäß der vorliegenden Erfindung wird nun aber aus dem Nachteil der Strahlaufhärtung bei Verwendung polyfrequenter Strahlung Nutzen gezogen, so dass quasi aus der Not eine Tugend gemacht wird. Erfindungsgemäß wird nun nämlich zur Ermöglichung einer Klassifizierung von Objektmaterialien nicht von einem festen, Dicken-unabhängigen Quotienten der Absorptionskoeffizienten ausgegangen, sondern die Strahlaufhärtung bei beispielsweise der Transmission der Röntenstrahlung durch die zu untersuchenden Materialien berücksichtigt. Die Dickenabhängigkeit des Verhältnisses der Transmissions- bzw. Reflexionskoeffizienten wird dadurch berücksichtigt, dass erfindungsgemäß zusätzlich zu einem Kombinationswert aus einem auf dem ersten Intensitätswert basierenden Wert und einem auf dem zweiten Intensitätswert basierenden Wert, nämlich bei einem speziellen Beispiel dem Quotienten des Logarithmus der beiden Intensitätswerte, zumindest auch der erste oder zweite Intensitätswert selbst zur Zuordnung des Objektmaterials einem der vorbestimmten Materialien verwendet wird.

Die gegenüber der in der WO 02/50521 A2 beschriebenen Vorgehensweise erzeugte Verbesserung besteht nun unter anderem darin, dass es möglich ist, industrielle, polychromatische Röntgenröhren als Strahlungsquellen zu nutzen, wobei der hier auftretende Effekt der Strahlaufhärtung keinen negativen Einfluss auf die Unterscheidungsmöglichkeit von ähnlichen Materialien hat. Das hier vorgeschlagene Verfahren führt zu einer eindeutigen Unterscheidung von Materialien trotz polychromatischer Strahlung. Industrielle Röntgenquellen liefern gegenüber monochromatisierten Quellen, außer Synchrotronstrahlern, eine sehr hohe Zahl an Röntgenquanten pro Zeit, so dass beim Einsatz einer Röntgenkamera mit einer Vielfalt von Bildelementen bzw. Pixeln die Integrationszeit des Röntgendetektors sehr kurz und die räumliche Auflösung des Detektors sehr hoch sein kann. Dadurch wird ein hoher Material-Durchsatz und eine Unterscheidung von kleinen Partikeln erreicht. Zudem können eine Vielzahl an Messwerten zu einer Probe gleichzeitig erhalten werden.

Bevorzugte Ausführungsbeispiele der vorliegenden Erfindung werden nachfolgend bezugnehmend auf die beiliegenden Zeichnungen näher erläutert. Es zeigen:

Fig. 1    ein Diagramm, in welchem der Q-Wert über die Materialdicke für drei ähnliche Aluminium-Legierungen aufgetragen ist;

Fig. 2    ein Diagramm, in welchem der Q-Wert für die drei Aluminium-Legierungen von Fig. 1 über die normierte transmittierte Intensität bei der niedrigeren Röhrenbeschleunigungsspannung aufgetragen ist;

Fig. 3a- 3c  schematische Zeichnungen von möglichen Anordnungen zur transmissiven Untersuchung eines Objekts gemäß Ausführungsbeispielen der vorliegenden Erfindung;

Fig. 4  ein Flussdiagramm zur Veranschaulichung der Vorgehensweise bei der Klassifizierung eines Objektmaterials gemäß einem Ausführungsbeispiel der vorliegenden Erfindung; und

Fig. 5  eine schematische Darstellung einer Vorrichtung zur automatischen Unterscheidung von Materialien gemäß einem weiteren Ausführungsbeispiel der vorliegenden Erfindung.

Bevor im folgenden bevorzugte Ausführungsbeispiele der vorliegenden Erfindung anhand der Figuren näher erläutert werden, wird darauf hingewiesen, dass sich die nachfolgenden Ausführungsbeispiele lediglich exemplarisch auf die transmisive Röntgenuntersuchung beziehen, dass die vorliegende Erfindung aber auch auf andere Untersuchungsarten angewendet werden kann, bei denen Material durch Transmission oder Reflexion von polychromatischer Strahlung unterschieden werden soll, und bei denen es durch unterschiedliche Wechselwirkungskoeffizienten zu einer Verschiebung der Schwerpunktenergie und dadurch zu einer Verschiebung des effektiven Wechselwirkungskoeffizienten, wie z.B. dem Absorptions- oder Reflexionskoeffizienten, kommt.

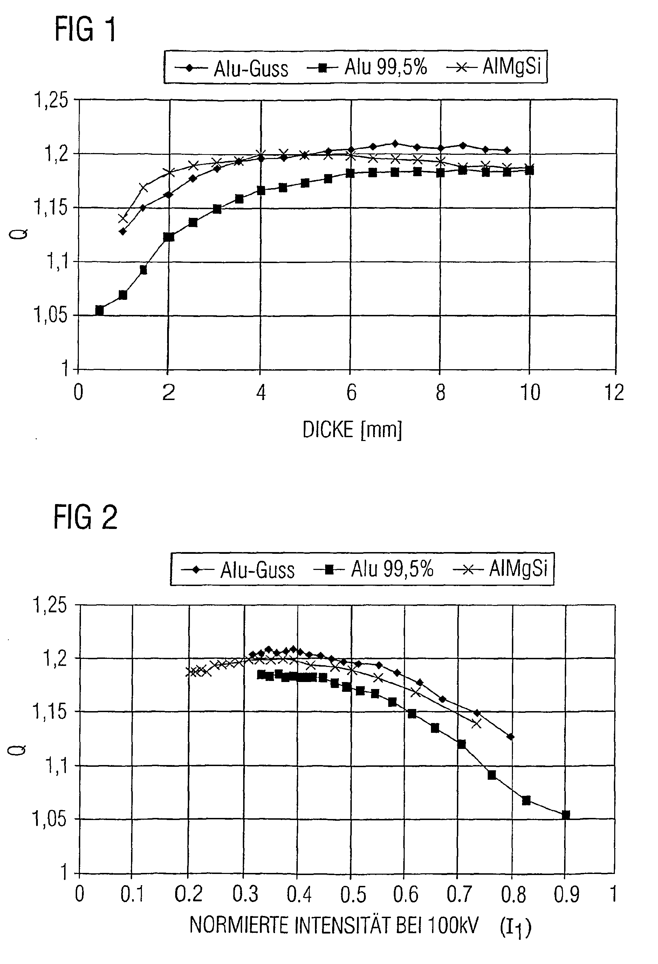

Anhand der Figuren 1 und 2 werden zunächst die Grundlagen erläutert, die zum Verständnis der Materialbestimmung gemäß der darauffolgend beschriebenen Ausführungsbeispiele nützlich sind. Ziel der Materialbestimmung gemäß der nachfolgenden Ausführungsbeispiele ist es, das Material eines Objekts einem Material aus einer vorbestimmten Mehrzahl von vorbestimmten Materialien zuzuordnen. Dazu werden gemäß dieser Ausführungsbeispiele zumindest zwei Durchstrahlungen des Objekts mit polychromatischer Röntgenstrahlung mit unterschiedlichen polychromatischen Strahlungsspektren durchgeführt. Aufgrund der polychromatischen Untersuchung kommt es zu der eingangs erwähnten und im folgenden genauer erörterten Strahlaufhärtung. Diese Strahlaufhärtung sorgt dafür, dass das Verhältnis der effektiven Schwächungskoeffizienten zu den beiden Durchstrahlungen dickenabhängig ist. Die Zuordnung des Objektmaterials zu einem der vorbestimmten Materialien wird deshalb gemäß dieser Ausführungsbeispiele unter Verwendung nicht nur des Verhältnisses des Logarithmus der beiden Intensitätswerte, sondern ferner unter Verwendung eines der beiden Intensitätswerte selbst durchgeführt, wie es im Folgenden beschrieben wird.

Bei der polychromatischen Röntgendurchstrahlung von Material bestimmter Dicke d folgt die Intensität I dem exponentiellen Lambert'schen Schwächungsgesetz:

$$I = \int I_0(E) \cdot \exp(-\mu(E) \cdot \rho \cdot d) dE$$

wobei $I_0(E)$ diejenige Intensität ist, mit welcher das Material bestrahlt worden ist, $\mu(E)$ den energieabhängigen, materialspezifischen Schwächungskoeffizienten des zu untersuchenden Materials, $\rho$ die Materialdichte des zu untersuchenden Materials und E einen Parameter der Strahlungsenergie bezeichnet.

Vereinfacht man diese Gleichung für den monochromatischen Fall, so entfällt die Integration über die Energie und es ergibt sich die Intensität I zu

$$I = I_0(E) \cdot \exp(-\mu(E, d) \cdot \rho \cdot d)$$

wobei in beiden Formeln d genau ausgedrückt die Dicke des zu untersuchenden Materials in Strahlrichtung an der Stelle bezeichnet, an welcher das Material durchstrahlt wird.

Der Schwächungskoeffizient $\mu(E,d)$ erscheint bei der vereinfachten zweiten Gleichung als ein dickenabhängiger effektiver Absorptionskoeffizient.

Werden nun zwei unterschiedliche polychromatische Röntgenspektren verwendet, wie z.B. indem zwei unterschiedliche Röntgenröhren mit unterschiedlichen Beschleunigungsspannungen verwendet werden, erhält man hierdurch eine Intensität $I_1$ für eine erste Röntgenröhren-Beschleunigungsspannung und eine Intensität $I_2$ für eine unterschiedliche zweite Röntgenröhren-Beschleunigungsspannung. Wird das Material an derselben Stelle durchleuchtet bzw. weist das Material eine gleichmäßige Dicke auf, so können $I_1$ und $I_2$ mit $I(E_1,d)$ und $I(E_2,d)$ nach obiger vereinfachter Formel angegeben werden, wobei $E_1$ beispielsweise eine mittlere effektive Strahlungsenergie des ersten polychromatischen Spektrums und $E_2$ eine mittlere effektive Strahlungsenergie des zweiten polychromatischen Spektrums bezeichnet.

Durch Logarithmierung und Division der gemessenen Intensitäten bei den zwei unterschiedlichen Röntgenröhren-Beschleunigungsspannungen entfällt die Materialdichte $\rho$ und die Materialdicke d, nicht aber die Dickenabhän-

gigkeit des effektiven Absorptionskoeffizienten $\mu(E,d)$ in der obigen vereinfachten Formel. Es ergibt sich der materialspezifische und dickenabhängige Quotient $Q(E_{1,2},d)$ demnach zu

$$\frac{\ln(I(E_1, d))}{\ln(I(E_2, d))} = \frac{\mu(E_1, d)}{\mu(E_2, d)} \equiv Q(E_{1,2}, d)$$

Fig. 1 zeigt eine Auftragung des berechneten Werts $Q(E_{1,2},d)$ über die Materialdicke d in Einheiten mm für drei verschiedene ähnliche Aluminium-Legierungen, nämlich Guss-Aluminium (Alu-Guss), eine Legierung mit einem Aluminiumanteil von 99,5% (Alu 99,5%) und einer Aluminium-Magnesium-Silizium-Legierung (AlMgsi). Die den berechneten Werten Q zugrundeliegenden Intensitätswerte $I(E_1,d)$ und $I(E_2,d)$ wurden durch Bestrahlungen mit einer Röntgenröhre erhalten, wobei zur Erzeugung der Röntgenstrahlung eine unterschiedliche Röntgenröhren-Beschleunigungsspannung verwendet worden ist, nämlich einmal eine Röntgenröhren-Beschleunigungsspannung von 100kV und das andere Mal eine Röntgenröhren-Beschleunigungsspannung von 130kV. Insbesondere wurden die in Fig. 1 erhaltenen Kennlinien für die unterschiedlichen Legierungen anhand realer Messungen an Proben mit variierender Dicke erhalten. Die Messpunkte sind in Fig. 1 mit Rauten, Quadraten und Kreuzchen für die unterschiedlichen Aluminium-Legierungen Alu-Guss-, Alu 99,5% und AlMgSi angezeigt, und die Kennlinien sind durch Verbinden der einzelnen Messpunkte erhalten worden.

Man erkennt aus Fig. 1, dass der Wert $Q(E_{1,2},d)$ nicht eindeutig bestimmten Materialien zugeordnet werden kann, da dieser Wert mit der Dicke variiert. Die Variationen über die Dicke kommt dadurch zustande, dass aufgrund der Strahlaufhärtung die effektiven Schwächungskoeffizienten $\mu(E_1,d)$ und $\mu(E_2,d)$, wie sie sich für die unterschiedlichen Beschleunigungsspannungen ergeben, dickenabhängig sind, und zwar mit einer unterschiedlichen Abhängigkeit von der Dicke. Mit zunehmender Dicke wird aufgrund der Strahlaufhärtung das Spektrum der beim Detektor eintreffenden Strahlung immer monochromatischer, so dass der Quotient aus den beiden effektiven Schwächungskoeffizienten $\mu$ in eine Sättigung gerät, wie es in Fig. 1 bei größeren Dicken zu erkennen ist. Wie schnell die einzelnen Kennlinien die Sättigung erreichen, hängt davon ab, wie sehr der energieabhängige Absorptionskoeffizient des zu untersuchenden Materials an der Energie $E_1$ bzw. $E_2$ variiert.

Hierdurch ergeben sich die charakteristischen Kennlinien für die unterschiedlichen Materialien.

Um nun den vermeintlichen Nachteil zu beheben, dass der Wert $Q(E_{1,2},d)$ allein nicht zur eindeutigen Bestimmung des Materials geeignet ist, wird bei den folgenden Ausführungsbeispielen ein Auswerteschema basierend auf einer Zweifach-Energie- bzw. Dual-Energy-Auswertung verwendet, das eine eindeutige Zuordnung gemessener Intensitätswerte zu bestimmten, vorher eingelernten Materialien erlaubt. Hier werden, wie es im Folgenden noch näher beschrieben wird, Wertetripel T oder Wertetupel P aus einem oder beiden gemessenen Einzelintensitäten $I(E_1,d)$ und $I(E_2,d)$ bei den unterschiedlichen Beschleunigungsspannungen oder bei anderen unterschiedlichen Bedingungen, die zu einem unterschiedlichen effektiven Durchstrahlungsspektrum führen, und aus dem Quotient der effektiven Absorptionskoeffizienten, der sich wiederum aus beiden Intensitätswerten herleitet, gebildet. Ein Beispiel für das Wertetripel T ist $T(I(E_1,d), I(E_2,d), Q(E_{1,2},d))$. Für ein Wertetupel P ist ein Beispiel $P(I(E_1,d), Q(E_{1,2},d))$

In Fig. 2 ist nun eine Auftragung der Werte $Q(E_{1,2},d)$ von Fig. 1 über die primäre Einzelintensität $I(E_1,d)$ bei der Röhrenspannung $E_1$ gezeigt. Die Messpunkte sind wiederum mit Rauten, Quadraten bzw. Kreuzchen angezeigt und miteinander verbunden, um Kennlinien für die einzelnen Materialien zu bilden. Die in den Kurven erkennbaren Schwankungen sind auf statistische Fluktuationen der Zahl der Röntgenquanten in den Röntgendetektor-Pixeln zurückzuführen, und können beispielsweise durch Signalmittelung deutlich verringert werden.

Aus der Darstellung in Fig. 2 wird klar, dass die Wertetripel T bzw. die Wertetupel P für alle verschiedenen in Frage kommenden Materialien und Materialdicken als Kennlinien kalibriert und unterschieden werden können. Anders ausgedrückt, können für zwei verwendete Röhrenspannungen $E_1$ und $E_2$ für interessierende Materialien und unter Variation der Materialdicke d die Q-Werte $Q(E_{1,2},d)$ erhalten werden, und als Referenzdaten bereitgestellt werden. Bei nachfolgenden Messungen an unbekannten Proben bzw. Objekten werden gemäß nachfolgender Ausführungsbeispiele dann bei identischen Aufnahmebedingungen, d.h. insbesondere mit denselben Beschleunigungsspannungen $E_1$ und $E_2$, und unter Verwendung derselben Berechnungsvorschriften wie denjenigen, die im Vorhergehenden zur Berechnung von Q beschrieben wurden, Wertetripel T oder Wertetupel P erzeugt und durch numerische Vergleichsmethoden den bekannten Materialien zugeordnet, wie z.B. demjenigen, dessen Kennlinie die Wertetripel bzw. Wertetupel am nächsten kommen. Das Prinzip funktioniert natürlich auch unter Verwendung von lediglich Wertetupeln, nämlich den Wertetupeln $(Q(E_{1,2},d), I(E_1,d))$ und $(Q(E_{1,2},d), I(E_2,d))$. In diesem Fall entsprechen die Referenzdaten beispielsweise den Kennlinien aus Fig. 2 für die vorbestimmten interessierenden Materialien. Die Zuordnung erfolgt dann beispielsweise dadurch, dass ein unbekanntes Material mit einer unbekannten Dicke d, für welches mit den Beschleunigungsspannungen $E_1$ und $E_2$ das Wertepaar $(Q(E_{1,2},d), I(E_1))$ erhalten worden ist, demjenigen Material zugeordnet wird, dessen Kennlinien diesem Wertepaar in dem Graphen von Fig. 2 am nächstgelegenen ist.

Die nachfolgenden Ausführungsbeispiele können folglich im Gegensatz zu der in der Beschreibungseinleitung beschriebenen Vorgehensweise nach der WO 02/50521 A2, die ja von einem dicken-unabhängigen Q-Wert ausgeht, die Tatsache ausnutzen, dass Objekte typischerweise eine Dickenvariation aufweisen, so dass für ein Objekt zur Auswertung ein ganzer Bereich von Wertetripeln bzw. Wertetupeln zum numerischen Vergleich mit den Referenzdaten zur Verfügung steht. So wird für ein Objekt nicht nur ein Wertetupel P oder Wertetripel T erhalten, sondern ganz viele solcher Wertetupel bzw. -tripel für unterschiedliche Dicken. Dies bedeutet nun wiederum, dass die Klassifizierung eines Objektmaterials nicht nur über einen einzelnen Punkt bzw. ein einzelnes Wertetupel oder Wertetripel durchgeführt werden muss, sondern über einen Vergleich einer ganzen Reihe von Wertetupeln bzw. Wertetripeln für unterschiedliche Dicken mit den Kennlinien der unterschiedlichen vorbestimmten Materialien durchgeführt werden kann. Dadurch steigert sich die Genauigkeit und Zuverlässigkeit der Bestimmungsschemata der nachfolgenden Ausführungsbeispiele.

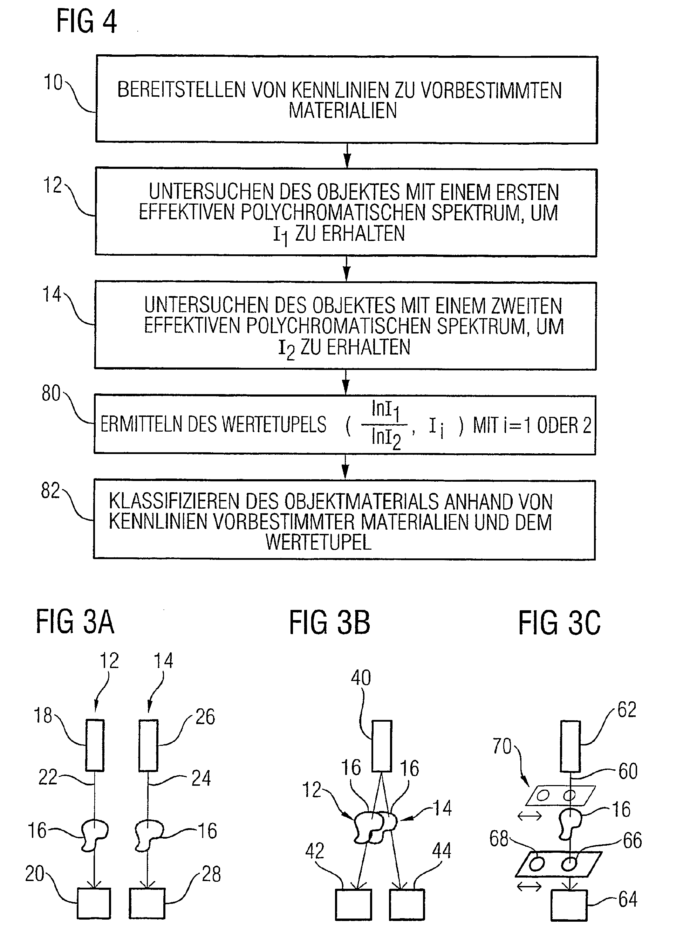

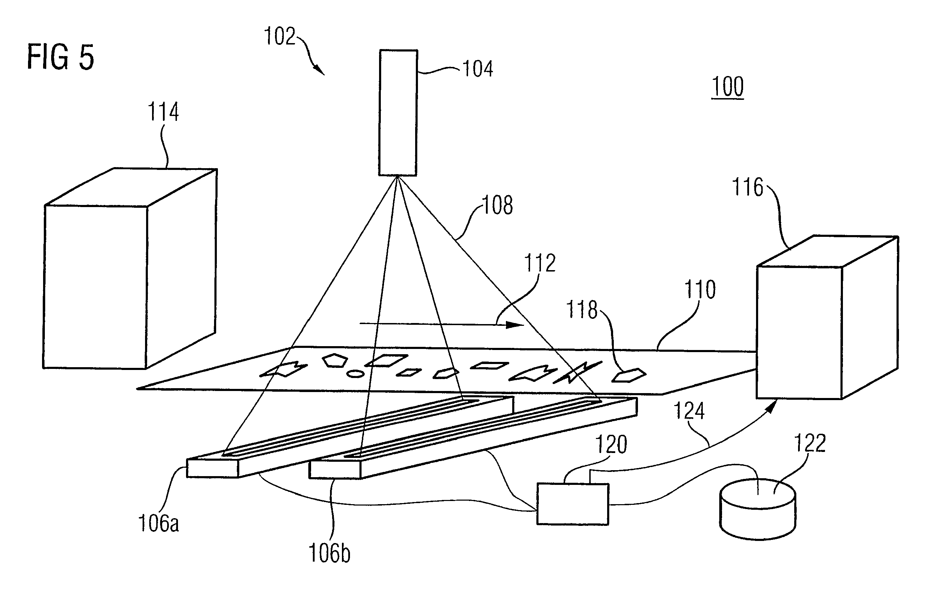

Nachdem nun im Vorhergehenden die Grundzüge der Vorgehensweise bei der Materialbestimmung der im Folgenden beschriebenen Ausführungsbeispiele beschrieben worden sind, werden nun im Folgenden bezugnehmend auf die Figuren 3a - 4 verschiedene Ausführungsbeispiele zur Materialbestimmung unter Verwendung einer Röntgendurchstrahlung etwas konkreter beschrieben und bezugnehmend auf Fig. 5 schließlich ein Ausführungsbeispiel für die Anwendung einer Materialbestimmung in einer Materialsortierungsanlage.

Unter den Fig. 3a - 4 zeigt Fig. 4 die Abfolge von Schritten zur Materialbestimmung bzw. Materialklassifizierung an, wobei bei der Beschreibung der Vorgehensweise nach Fig. 4 Bezug auf die Fig. 3a - 3c genommen wird, die verschiedene mögliche Anordnungen zur Durchstrahlung eines Objekts mit unterschiedlichen polyfrequenten Strahlungsspektren anzeigen.

Zur Materialbestimmung eines zu untersuchenden Objekts unbekannten Materials bzw. zur Klassifizierung des Objektmaterials werden in einem Schritt 10 zunächst zu einer Mehrzahl von vorbestimmten, bekannten Materialien Kennlinien bereitgestellt. Die Bereitstellung kann das Speichern von die Kennlinien definierenden Daten genauso umfassen wie das Generieren dieser Kennlinien durch Durchführen von Messungen an den vorbestimmten Materialien, wie es im Vorhergehenden Bezug nehmend auf Fig. 2 beschrieben worden ist. Die Kennlinien sind entweder in einer analytischen Form oder unter Verwendung von Stützpunkten bzw. Messpunkten abgespeichert, wie es in Fig. 2 gezeigt ist.

Zur Erzeugung der Kennlinien sind, wie Bezug nehmend auf Fig. 2 beschrieben, für jedes vorbestimmte Material mehrere Messungen durchgeführt worden. Jede Messung wurde bei einer unterschiedlichen und nicht notwendigerweise bekannten Dicke des vorbestimmten Materials durchgeführt. Beispielsweise wurde ein bekanntes Material einfach abgetastet und damit an unterschiedlich dicken Stellen durchleuchtet. Jede Messung umfasste die Durchstrahlung des Materials mit einem ersten polyfrequenten Spektrum der Energie $E_1$ und einem zweiten polyfrequenten Spektrum der Energie $E_2$, so dass jede Messung zwei Intensitätswerte $I(E_1,d)$ und $I(E_2,d)$ bei der jeweiligen, gegebenenfalls unbekannten Dicke d ergab. Das Ergebnis der Messungen für ein vorbestimmtes Material wurde dann zu einer Reihe von Tupeln P bzw. Tripeln T zusammengefasst, die im Folgenden allgemein auch manchmal als Vektoren bezeichnet werden. Die Vektoren für ein vorbestimmtes Material sind gegeben durch: $(I(E_1,d_i), Q(E_{1,2},d_i))$, $(I(E_2,d_i), Q(E_{1,2},d_i))$ oder $(I(E_1, d_i), I(E_2,d_i), Q(E_{1,2},d_i))$, wobei die Werte $d_i$ die Dicken angeben, die bei den unterschiedlichen Messungen i an dem vorbestimmten Material durchstrahlt worden sind, und i ein Index für die Messungsnummer ist. Der erstgenannte Fall, dass für jede Dickenmessung an einem vorbestimmten Material lediglich ein Tupel P der Intensität $I(E_1,d)$ und des Quotienten $Q(E_{1,2},d)$ verwendet worden ist, ist in Fig. 2 dargestellt worden. In diesem Fall ist die Kennlinie folglich eine eindimensionale Funktion, die über einer Intensität definiert ist, nämlich die bei der Strahlungsenergie $E_1$ gemessene Intensität $I_1$ bzw. $I(E_1,d)$. In dem Fall der Verwendung von Wertetripeln ist die Kennlinie eine in einem dreidimensionalen Raum verlaufende Linie, an dessen drei Raumachsen die Intensität $I_1$, die Intensität $I_2$ bzw. der Wert Q aufgetragen ist. Wie bereits erwähnt, können entweder nur diese Stützstellen zur Definition der Kennlinien bereitgestellt werden oder es werden Interpolationen oder Parameter für analytische Näherungsfunktionen für diese Kennlinien bereitgestellt. Bezug nehmend auf Schritt 10 wird explizit nochmals darauf hingewiesen, dass bei den unterschiedlichen Messungen bezüglich ein und desselben vorbestimmten Materials die gerade durchstrahlte Dicke des Materials nicht bekannt sein muss. Kennliniendaten können auch mit einem Objekt eines bekannten Materials erzeugt werden, das unterschiedliche Dicken und insbesondere unbekannte Dicken aufweist.

Es sei an dieser Stelle darauf hingewiesen, dass der Schritt 10 nicht unbedingt ausgeführt werden muss. Es ist nämlich möglich, dass die Kennlinien- bzw. Referenzdaten auch simulativ, also durch eine Simulation, oder rechnerisch, also durch eine Berechnung, vorab erzeugt werden. Dabei kann die Simulation den Durchstrahlungsvorgang vollständig simulieren. Möglich ist aber ferner, dass ausgehend von für ein erstes vorbestimmtes Material durch Messung erhaltene Kennliniendaten durch Simulation oder Berechnung, wie z.B. Inter- oder Extrapolation, Kennliniendaten für ein anderes Material hergeleitet werden.

In einem Schritt 12 wird nun das zu untersuchende Objekt mit dem ersten effektiven polychromatischen Spektrum untersucht, wie es auch zur Erzeugung der Kennliniendaten in Schritt 10 verwendet worden ist, und das beispielsweise der Energie $E_1$ entspricht. In dem Schritt 12 wird somit ein Intensitätswert $I_1$ erhalten, mit $I_1 = I(E_1,d)$, wobei d die Dicke des Objekts an der Durchstrahlungsstelle ist. In einem Schritt 14 wird daraufhin das Objekt mit dem zweiten effektiven polychromatischen Spektrum untersucht, das auch bereits bei den Messungen in Schritt 10 verwendet worden ist und der Energie $E_2$ entspricht. Bei Schritt 14 wird der Intensitätswert $I_2$ bzw. $I(E_2,d)$ erhalten.

Die Fig. 3a - 3c zeigen verschiedene Möglichkeiten zur Durchführung der Schritte 12 und 14. Fig. 3a zeigt mit durchgezogenen Linien das zu untersuchende Objekt 16, wie es zwischen einer Anordnung aus Röntgenquelle 18 und einen Röntgendetektor 20 in dem Strahlengang 22 platziert ist. Auf diese Weise wird die Untersuchung nach Schritt 12 durchgeführt. Bei Schritt 12 wird eine erste Röntgenröhren-Beschleunigungsspannung in der Röntgenquelle 18 verwendet. Mit gestrichelten Linien zeigt Fig. 3a das Objekt 16 in einem Zustand während des zweiten Untersuchungsschrittes 14. In diesem Zustand ist das Objekt 16 in den Strahlengang 24 zwischen einer weiteren Röntgenquelle 26 und einem weiteren Röntgendetektor 28 angeordnet. Die Röntgenquelle 26 verwendet eine Röntgenröhren-Beschleunigungsspannung, die von derjenigen der Röntgenquelle 18 verschieden ist. Damit unterscheidet sich das Spektrum, mit welchem das Objekt 16 in den Schritten 12 und 14 durchleuchtet wird. Die Röntgendetektoren 20 und 28 sind bei dem Ausführungsbeispiel in Fig. 3 beispielsweise identisch und sind für sowohl das Röntgenspektrum der Quelle 18 als auch das Röntgenspektrum der Quelle 26 empfindlich.

Auf diese Weise wird gemäß dem Ausführungsbeispiel von Fig. 3a eine polyfrequente Durchstrahlung des Objekts 16 mit unterschiedlichen polyfrequenten Spektren erzielt.

Das Ausführungsbeispiel von Fig. 3a kann darin abgewandelt werden, dass zur Durchführung der Schritte 12 und 14 ein und dasselbe Paar von Röntgenquelle 18 und Röntgendetektor 20 verwendet wird. In diesem Fall wird zwischen den Schritten 12 und 14 lediglich die Röntgenröhren-Beschleunigungsspannung verändert, wodurch sich das Bremsspektrum der dann einzigen Röntgenquelle zwischen den Schritten 12 und 14 ändert. Ferner wäre es möglich, dass bei dem Ausführungsbeispiel von Fig. 3a die Röntgendetektoren 24 und 28 unterschiedliche Empfindlichkeiten aufweisen, nämlich dass der Röntgendetektor 20 für die Röntgenstrahlung der Röntgenquelle 18 und der Röntgendetektor 28 für die Röntgenstrahlung der Röntgenquelle 26 empfindlicher ist. Das effektive polyfrequente Strahlungsspektrum bei dem Schritt 12 ist beispielsweise als das Produkt aus dem zur Bestrahlung verwendeten Röntgenspektrum und dem Empfindlichkeitsverlauf bzw. der Empfindlichkeitskennlinie des zugeordneten Röntgendetektors definiert.

Fig. 3b zeigt eine alternative Anordnung zur Fig. 3a. Bei dieser Anordnung wird das Objekt 16 sowohl im Schritt 12, der mit durchgezogenen Linien dargestellt ist, als auch im Schritt 14, der durch gestrichelte Linien angedeutet ist, von ein und derselben Röntgenquelle 40 bestrahlt, die ferner bei beiden Schritten 12 und 14 dieselbe Beschleunigungsspannung verwendet. Damit ist das zur Bestrahlung verwendete Röntgenspektrum bei beiden Schritten gleich. Jedoch wird die durch das Objekt 16 verlaufende Röntgenstrahlung von dem Schritt 12 durch einen Röntgendetektor 42 erfasst und in dem Schritt 14 durch einen anderen Röntgendetektor 44, wobei die beiden Röntgendetektoren 42 und 44 unterschiedliche Empfindlichkeitskennlinien aufweisen. Letzteres wird beispielsweise durch Verwendung von Filtern bei den Röntgendetektoren 42 und 44 erzielt.

Alternativ wird die unterschiedliche Empfindlichkeit durch Verwendung unterschiedlicher Erfassungsmaterialien in den Detektoren 42 und 44 erzielt. Wiederum eine andere Möglichkeit besteht darin, in dem Fall von direkthonvertierenden Detektoren 42 und 44, wie z.B. solchen, die auf GaAs basieren, bei ansonsten physikalisch gleichem Aufbau unterschiedliche Diskriminatoren zu verwenden. Direktkonvertierende Detektoren sind derart ausgebildet, dass eintreffende Röntgenquanten in den einzelnen Pixeln der Detektoren Pulsamplituden im Erfassungssignal erzeugen, die dann in den Detektoren 42 und 44 gezählt werden, um Zählerwerte zu erhalten, die die oben erwähnten Intensitätswerte $I_1$ bzw. $I_2$, also die eigentliche Ausgangssignale der Detektoren, darstellen bzw. angeben. Dabei verwendet jeder solcher Detektor einen sogenannten Diskriminator, also einen Schwellenwert, um nur Pulse mit solchen Pulsamplituden zu zählen, die den vorbestimmten Schwellenwert überschreiten. Die Höhe der Pulsamplituden variiert nun aber mit der Energie der eintreffenden Quanten. Somit kann die Energiediskrimination beispielsweise dadurch erzielt werden, dass bei direktkonvertierenden Detektoren 42 und 44 geeignet unterschiedliche Diskriminatoren zur Unterscheidung der durch die Röntgenquanten erzeugten Pulsamplituden eingesetzt werden.

Bei dem Ausführungsbeispiel von Fig. 3b ergibt sich folglich trotz Verwendung desselben Bestrahlungsspektrums in den Schritten 12 und 14 ein unterschiedliches effektives polychromatisches Durchstrahlungsspektrum, da die Röntgendetektoren 42 und 44 bei höheren bzw. niedrigeren Röntgenenergien unterschiedlich empfindlich sind.

Nach dem Ausführungsbeispiel vom Fig. 3c wird das Objekt 16 in beiden Schritten 12 und 14 in einen Strahlengang 60 zwischen einer Röntgenquelle 62 und einen Röntgendetektor 64 platziert, wobei bei beiden Schritten in der Röntgenquelle 62 dieselbe Beschleunigungsspannung verwendet wird. Jedoch wird in den Strahlengang 60 entweder hinter das Objekt 16 noch vor dem Röntgendetektor 64 eines von zwei Filtern 66 bzw. 68 geschaltet, die unterschiedliche Filterkennlinien aufweisen. Zwischen den aufeinanderfolgenden Schritten 12 und 14 wird dann das jeweils andere Filter in den Strahlengang 60 geschoben bzw. das Filter gewechselt. Wie durch gestrichelte Linien bei 70 angedeutet ist, könnten die Filter 66 und 68 ferner auch in den Strahlengang 60 vor dem Objekt 16, d.h. zwischen Röntgenquelle 62 und Objekt 16, platziert werden.

Anstelle einer hintereinadergeschalteten Intensitätswerterfassung nach Fig. 3c könnte allerdings auch als ein Detektor ein röntgenempfindliches Spektrometer verwendet werden, das dann in einer Aufnahme unterschiedliche Intensitätswerte für unterschiedliche effektive Spektralwerte erzeugt.

Nachdem nun in den Schritten 12 und 14 mittels unterschiedlicher effektiver polychromatischer Durchstrahlungsspektren durch Bestrahlung des Objekts an derselben Stelle des Objekts oder zumindest an einer Stelle mit derselben Dicke des Objekts die Werte $I_1$ und $I_2$ erhalten worden sind, wird in einem Schritt 80 das Wertetupel P $(I_1, Q_{1,2})$, das Wertetupel $P(I_2, Q_{1,2})$ oder das Wertetripel $T(I_1, I_2, Q_{1,2})$ mit $I_1 = I(E_1,d)$, $I_2 = I(E_2,d)$ und $Q_{1,2} = Q(E_{1,2},d)$ ermittelt, je nachdem, nach welchen Wertetupeln bzw. Wertetripeln die Kennlinien vorbestimmter Materialien definiert sind, die in Schritt 10 bereitgestellt werden, wobei jedoch auch gemessene Wertetupel mit einer Wertetripel-Kennlinie verglichen werden könnten. Zur Bestimmung von $Q_{1,2}$ wird die oben bezüglich Fig. 1 erläuterte Formel verwendet, d.h.

$$Q_{1,2} = \frac{\ln(I_1)}{\ln(I_2)}.$$

Der Schritt 80 wird beispielsweise von einem Computer durchgeführt, der mit dem bzw. den Röntgendetektoren 20, 28, 42, 44, 64 gekoppelt ist und zudem Zugriff auf die in Schritt 10 bereitgestellten Kennlinien aufweist.

Die Schritte 12, 14 und 80 werden ggf. mehrmals an unterschiedlichen Stellen eines Objekts durchgeführt, beispielsweise zu mehreren Zeitpunkten, während das Objekt im wesentlichen senkrecht zu dem bzw. den Strahlengängen der Anordnungen aus Fig. 3a, 3b und 3c, beispielsweise auf einem Fließband liegend, vorbeibewegt und dabei gescannt wird. Die Schritte 12, 14 und 80 werden dabei beispielsweise mit einer bestimmten Wiederholfrequenz wiederholt. Jedesmal ergibt sich in Schritt 80 ein Wertetupel bzw. Wertetripel. Da die Objekte zumeist eine variierende Dicke aufweisen, betreffen die sich ergebenden Wertetupel bzw. Wertetripel verschiedene, aber unbekannte Dicken d. In einem Schritt 82 werden nun all diese Wertetupel bzw. Wertetripel oder das eine Wertetupel oder Wertetripel verwendet, um das Objektmaterial zu klassifizieren. Die Klassifizierung in Schritt 82 wird anhand der Kennlinien aus Schritt 10 zu den vorbestimmten Materialien und dem bzw. den Wertetupeln bzw. Wertetripeln durchgeführt. Durch die Klassifizierung wird das Objektmaterial einem der vorbestimmten Materialien zugeordnet, zu denen Kennlinien in Schritt 10 bereitgestellt sind. Die Klassifizierung in Schritt 82 ist beispielsweise derart ausgeführt, dass das Objektmaterial demjenigen aus den vorbestimmten Materialien zugeordnet wird, zu dessen Kennlinie das bzw. die Wertetupel bzw. Wertetripel aus Schritt 80 den kleinsten gemittelten Abstand aufweisen, oder die Summe der Abstandsquadrate minimal ist oder dergleichen.

Bezüglich der Fig. 3a - 3c wird darauf hingewiesen, dass dort lediglich zur Vereinfachung der Darstellung nur von einem Strahlengang die Rede war. Als Röntgendetektoren können jedoch auch Zeilen- oder Flächenkameras Verwendung finden. In diesem Fall wird das zu untersuchende Objekt gleichzeitig an verschiedenen Stellen durchleuchtet bzw. untersucht. Aus einer Aufnahmesequenz werden für jeden Objektpunkt bzw. jedes Pixel eines solchen Röntgendetektors Wertetupel bzw. Wertetripel erzeugt, wobei für jeden Objektpunkt in der Zeile von Objektpunkten bzw. für jeden Objektpunkt in dem Array von Objektpunkten eine unterschiedliche Objektdicke vorliegen kann. Es resultiert somit schon bei einer Aufnahme eine Vielzahl von Wertetripeln bzw. Wertetupeln, die alle auf oder in der Nähe der Kalibrierkennlinie des zu bestimmenden Materials liegen und durch numerische Methoden dem gesuchten Materialtyp in Schritt 82 gemeinsam zugeordnet werden können.

Ferner sei bezüglich auf die vorhergehende Beschreibung darauf hingewiesen, dass, wie bereits erwähnt, zwar die Auswertung von Wertepaaren P $(I(E_1,d), Q(E_{1,2},d))$ bzw. $P(I(E_2,d), Q(E_{1,2},d))$ eine eindeutige Bestimmung des Materials erlaubt, das aber die Verwendung des Wertetripels T, d.h. $T(I(E_1,d), (I(E_2,d), Q(E_{1,2},d))$ eine höhere Klassifizierungssicherheit bei dem Schritt 82 erlaubt.

Ebenso sei hier darauf hingewiesen, dass der Einsatz von mehr als zwei verschiedenen Röntgenspektren im Allgemeinen zu einer Erhöhung der Klassifizierungssicherheit führen wird. In diesem Fall würde folglich zu den Schritten 12 und 14 ein weiterer Untersuchungsschritt mittels eines dritten effektiven polychromatischen Spektrums durchgeführt werden, dass sich von den beiden anderen Spektren unterscheidet. In diesem Fall könnte ein Wertequadrupel verwendet werden usw.

Weiterhin sei darauf hingewiesen, dass es mehrere Art und Weisen gibt, mit industriellen Röntgenröhrchen unterschiedliche Röntgenspektren zu erzeugen. Das Intensitätsspektrum einer Röntgenröhre ist bestimmt durch die Wahl des Anoden-Materials, der Beschleunigungsspannung, wie es im Vorhergehenden beschrieben worden ist, aber auch durch die nachfolgende Strahlfilterung zwischen Quelle und Detektor, wie es Bezug nehmend auf Fig. 3c angedeutet worden ist, wobei das Filter dann meist vor der Röntgenkamera angeordnet ist. All diese Maßnahmen können zur Variation des Bestrahlungsspektrum verwendet werden. Im einfachsten Fall können unter Einsatz nur einer Röntgenquelle mit konstanter Beschleunigungsspannung mittels unterschiedlicher Strahlvorfilterung verschiedener Filterdicke oder Filtermaterialtyp vor zwei unterschiedlichen Röntgenkameras zwei unterschiedliche Röntgenspektren gemessen bzw. zur Durchstrahlung verwendet werden, wie bezüglich Fig. 3b beschrieben worden ist. Die beiden Röntgenkameras weisen dann beispielsweise eine unterschiedliche Empfindlichkeit bezüglich hoher oder niedriger Röntgenenergie auf. Es resultiert ein Unterschied in der Schwerpunktenergie bzw. der mittleren Energie des Spektrums, da bei stärkerer Strahlfilterung die niederenergetischen Anteile der primären Röntgenintensität beispielsweise stärker unterdrückt werden, wodurch es zur bereits oben beschriebenen Strahlaufhärtung kommt. Eine weitere Möglichkeit zur Erzeugung unterschiedlicher Spektren ist der Einsatz von zwei verschiedenen Röntgenröhren bei unterschiedlicher Beschleunigungsspannung in Kombination mit zwei Röntgenkameras, womit sich im Allgemeinen ein größerer Unterschied in der Schwerpunktenergie in der Röntgenstrahlung bei einer höheren Strahlungsintensität erreichen lässt, wobei dieses Ausführungsbeispiel bezugnehmend auf Fig. 3a angedeutet worden ist.

Ferner sei angemerkt, dass sich zwar die bisher beschriebenen Ausführungsbeispiele lediglich auf den Einsatz von Röntgenstrahlung bezogen, dass aber die vorliegende Erfindung ferner in Verbindung mit Strahlungstypen eingesetzt werden kann, die ebenfalls dazu geeignet sind, ein Material durch Transmission oder Reflexion von polychromatischer Strahlung zu untersuchen, und bei denen es durch unterschiedliche Wechselwirkungskoeffizienten zu einer Verschiebung der Schwerpunktenergie und dadurch zu einer Verschiebung des effektiven Absorptions- oder Reflexionskoeffizienten kommt. Als Beispiel hierfür seien der Einsatz von thermischen Neutronen, Terrahertz-Strahlung, sichtbarer Strahlung, Infrarotstrahlung, UV-Strahlung und ähnliches genannt.

Im Vorhergehenden sind Ausführungsbeispiele für Klassifizierungs- bzw. Materialbestimmungsverfahren bzw. entsprechende Vorrichtungen unabhängig von einer entsprechenden Anwendung beschrieben worden. Die Information, die sich bei diesen Verfahren ergibt, nämlich die Information über das Objektmaterial, aus dem das Objekt besteht, bzw. über den Materialtyp des untersuchten Objekts, kann beispielsweise verwendet werden, um eine mechanische Materialsortierungsvorrichtung anzusteuern, um eine Trennung der interessierenden Materialien zu erzielen. Auf die Darstellung eines solchen Einsatzes bezieht sich Fig. 5.

Fig. 5 zeigt eine mechanische Materialsortierungsvorrichtung 100, die ein Klassifizierungsverfahren nach Fig. 4 und eine Anordnung nach Fig. 3b verwendet. Die Vorrichtung 100 umfasst eine Durchstrahlungsanordnung 102, die gemäß Fig. 3b eine Röntgenröhre 104 als Röntgenquelle und zwei Röntgenzeilenkameras 106a und 106b als Röntgendetektoren aufweist, wobei die Röntgenzeilenkameras 106a und 106b unterschiedliche Empfindlichkeitskennlinien aufweisen bzw. für nieder- bzw. höherenergetische Röntgenstrahlung aus dem Röntgenspektrum der Röntgenröhre 104 unterschiedlich empfindlich sind. Die Röntgenröhre 104 ist derart angeordnet, dass die Röntgenstrahlung 108 auf die Pixel der Pixelzeilen beider Röntgenzeilenkameras 106a und 106b auftrifft. Den Strahlengang 108 zwischen Röntgenröhre 104 und Zeilenkameras 106a, 106b schneidend ist ein Förderband 110 derart platziert, dass eine Förderrichtung 112 der Fördereinrichtung 110 im wesentlichen senkrecht zu dem Strahlengang 108 und ferner im wesentlichen senkrecht zu einer Erstreckungsrichtung bzw. im wesentlichen senkrecht zu der Zeilenrichtung der Zeilenkameras 106a - 106b verläuft. Das Förderband 110 ist zwischen beispielsweise einem Schredder 114 und einer Sortierstation 116 angeordnet, um geschredderte Objektteile 118 von dem Schredder 114 zu der Sortierstation 116 zu fördern und dabei durch die Strahlengänge 108 zu bewegen, die von der Röntgenröhre 104 zu den einzelnen Pixeln der Zeilenkameras 106a - 106b verlaufen. Mit den Röntgenzeilenkameras 106a und 106b ist eine Auswerteeinrichtung 120 gekoppelt, die ihrerseits wiederum mit einem Speicher 122 gekoppelt ist, in welchem Referenzdaten bezüglich vorbestimmter Materialien bereitgestellt sind, wie es Bezug nehmend auf Schritt 10 von Fig. 4 beschrieben worden ist.

Nachdem bei dem Vorhergehenden der Aufbau der Anlage 100 beschrieben worden ist, wird im Folgenden Ihre Funktionsweise beschrieben. Zunächst wird die Anlage 100 kalibriert. Die Kalibrierung wird dadurch durchgeführt, dass Objekte 118 mit unterschiedlichen, aber bekannten Materialien mittels des Förderbandes 110 durch die Anordnung 102 gefahren werden, und dabei Kennlinien für diese bekanten Materialien erzeugt werden, wie dies Bezug nehmend auf Schritt 10 von Fig. 4 beschrieben worden ist. Bei dieser Kalibrierung wird also insbesondere für ein Objekt 118 mit bekanntem Material eine Durchstrahlung gemäß Schritt 12 mittels der Zeilenkamera 106a und einer Messung gemäß Schritt 14 mittels der Zeilenkamera 106b erhalten, und zwar bezüglich aller Pixel, von denen aus das Objekt 118 die Verbindungslinie zu der Röntgenröhre 104 abdeckt. Die Aufnahmen der Zeilenkameras 106a und 106b werden dabei zeitversetzt zueinander durchgeführt, derart, dass der Teil des Objekts 118, der bei der Aufnahme mit der Zeilenkamera 106a bestrahlt worden ist, auch bei der Aufnahme gemäß Schritt 14 durch die Zeilenkamera 106b durchstrahlt wird. Die Auswerteeinrichtung 120 nimmt dann die Ermittlung der Wertetupel bzw. Wertetripel gemäß Schritt 80 vor. Diese Werte speichert die Einrichtung 120 dann als die Kennliniendaten in dem Speicher 122 oder alternativ dazu berechnete Parameter für analytische Näherungskennlinien. Jeder Kennlinie in dem Speicher 122 ist eine Angabe zugeordnet, die das bekannte Material angibt, aus welchem das Objekt 118 bestand, durch welche diese Kennliniendaten erzeugt worden sind.

Nachdem die Kalibrierkennlinien, bestehend aus Wertetripeln oder Wertepaaren für die bekannten Materialien und unterschiedlichen Dicken, wie sie solche Objekte 118 meistens aufweisen, erzeugt und gespeichert worden sind, arbeitet die Anlage im Messbetrieb wie bezugnehmend auf Fig. 4 beschrieben, indem sie Datenaufnahmen an unbekannten Objekten 118 durchführt. Insbesondere wird folglich das unbekannte Objekt 118 zunächst durch die Zeilenkamera 106a gescannt, um die Untersuchung gemäß Schritt 12 durchzuführen. Zeitversetzt hierzu wird das Objekt 118 durch die Zeilenkamera 106b gescannt, um die Untersuchung nach Schritt 14 durchzuführen. Der Zeitversatz ist wiederum derart, dass jede Stelle, die bei der Messung durch die Zeilenkamera 106a bestrahlt worden ist, danach bei der Aufnahme durch die Zeilenkamera 106b durchstrahlt wird. Beide Aufnahmen führen zu Paaren von Werten $I_1$ und $I_2$ für jedes Pixel, das kurzzeitig abgedeckt wurde. Die Verarbeitungseinrichtung 120 ermittelt gemäß Schritt 80 die Wertetupel bzw. Wertepaare und klassifiziert gemäß Schritt 82 unter Verwendung der Kennliniendaten aus dem Speicher 122 das Objektmaterial des Objektes 118 unbekannten Materials. Über eine Übertragungsstrecke 124 sendet die Auswerteeinrichtung 120 dann ein Signal an die Sortierstation bzw. die mechanische Sortiereinrichtung 116, das anzeigt, welchem der Materialien, zu denen Kenndaten in dem Speicher 122 abgelegt sind, das unbekannte Objekt 118 entspricht. Die Sortierstation 116 sortiert die unbekannten Objekte 118 auf dem Förderband 110 dementsprechend. Die Auswerteeinrichtung 120 gibt die Signale zu den unbekannten Objekten 118 auf dem Förderband 110 derart an die Sortierstation 116 aus, dass letztere die Signale auf der Leitung 124 den auf dem Förderband 110 ankommenden Objekten 118 geeignet zuordnen kann.

Anders ausgedrückt, sieht die Anlage 100 zur praktischen Umsetzung der Materialbestimmung eine scannende Arbeitsweise vor. Dabei wird gemäß Fig. 5 eine Durchstrahlungsanordnung 102 mit einer Röntgenquelle 104 und zwei Röntgendetektoren 106a und 106b verwendet. Wie es im Vorhergehenden bereits beschrieben worden ist, ist es jedoch ferner möglich zwei industrielle Röntgenquellen zu verwenden, die mit unterschiedlichen Beschleunigungsspannungen betrieben werden. Ferner könnten anstatt Röntgenzeilenkameras als Röntgendetektören auch Röntgenflächenkameras verwendet werden. Die Zeilenkameras 106a und 106b könnten entweder nur eine oder aber mehrere Pixelzeilen aufweisen, die in Förderrichtung 112 hineinanderliegend angeordnet sind. Solche Mehrzeilen-Röntgenkameras könnten im Time-Delay-and-Integration- bzw. Zeitversatz- und Integrationsmodus betrieben werden. Das bedeutet, die Belichtungszyklen der einzelnen Zeilen dieser Röntgenzeilenkameras würden derart mit der Fördergeschwindigkeit des Förderers 110 abgestimmt werden, dass eine Stelle vom Objekt 118, die bei einem ersten Aufnahmezyklus von einem Röntgenstrahl bestrahlt wird, der auf ein Pixel einer ersten Zeile trifft, beim nächsten Zyklus von einem Röntgenstrahl bestrahlt wird, der auf ein entsprechendes Pixel der nächsten Zeile der Zeilenkameras trifft. Die sich ergebenden Intensitätswerte werden aufsummiert, und zwar für jede Zeile einer solchen Mehrzeilen-Röntgenkamera. Auf diese Weise kann die Integrationszeit erhöht bzw. eine bessere Nutzung der transmittierten Röntgenstrahlung 108 erzielt werden.

Die Zeilenkameras 106a und 106b von Fig. 5 können beispielsweise Zeilenkameras sein, die mit unterschiedlichen vorgefilterten Eintrittsfenstern ausgestattet sind. Obwohl die Zeilenkameras in Fig. 5 senkrecht zur Bewegungsrichtung 112 der Objekte 118 angeordnet sind, sind andere Orientierungen völlig ebenfalls denkbar.

Es sei darauf hingewiesen, dass es in bestimmten Fällen vorteilhaft sein kann, anstelle von Zeilenkameras Flächenkameras einzusetzen. Flächenkameras bieten den Vorteil, dass bei einem Aufnahmevorgang gleichzeitig ein gesamtes zweidimensionales Durchstrahlungsbild einer bestrahlten Szene aufgenommen werden kann, was unter Umständen zu einem Geschwindigkeitsvorteil der Anwendung führen kann.

Die zu untersuchenden Materialien werden vorzugsweise mittels Förderband zwischen der Röntgenquelle und den Röntgenkameras kontinuierlich hindurch bewegt und dabei von der emittierten Röntgenstrahlungseinheit 108 durchstrahlt, wie es im Vorhergehenden beschrieben worden ist. Ebenso könnte jedoch unter Verwendung von Röntgenflächenkameras eine nicht-scannende Anwendung realisiert werden, bei den die zu untersuchenden Objekte im ruhenden Zustand untersucht werden. Wird eine Kurzzeitimpuls-Röntgenröhre bzw. Blitzröhre eingesetzt, so können die Objekte 108 während der Scann-Bewegung mittels Flächenkamera aufgenommen werden.

Es ist möglich, dass von den der Röntgenröhre 104 gegenüberliegenden Röntgenkameras 106a, 106b die durch das Förderband 110 und die Objekte 118 transmittierte Röntgenstrahlung 108 erfasst, in ein elektrisches Signal umgewandelt und anschließend digitalisiert wird. Die Intensitätswerte werden an die Auswerteeinrichtung 120 bzw. ein Datenverarbeitungssystem weitergeleitet, wo die oben beschriebenen Klassifikationsalgorithmen durchgeführt werden. Die nachgeschaltete mechanische Separationsvorrichtung 110 führt letztlich zur Trennung unterschiedlicher Materialien.

Bezug nehmend auf das Ausführungsbeispiel von Fig. 5 wird noch darauf hingewiesen, dass aufgrund der lateralen Auflösung der Röntgenkameras 106a, 106b die Objekte 118 zweidimensional abgebildet werden. Dadurch kann zusätzlich zur reinen Materialunterscheidung die Fläche und die Form der Objekte erfasst werden. Aus dem bestimmten Materialtyp und den transmittierten Intensitätswerten kann die Dicke der Objekte, und zusammen mit der Fläche kann das Volumen der Objekte 118 bestimmt werden. Über die bekannte Materialdichte kann die Masse der Objekte berechnet werden. All diese Berechnungen könnten durch die Auswerteeinrichtung 120 durchgeführt werden. Diese zusätzlichen Informationen können im Anschluss zu weiteren Entscheidungsabläufen bei der Materialsortierung durch die Sortierstation 116 verwendet werden.

Bezug nehmend auf die vorhergehende Beschreibung wird noch darauf hingewiesen, dass nicht notwendigerweise das Verhältnis des Logarithmus der beiden Intensitätswerte als Q-Wert verwendet wird. Es könnte ferner sein, dass zu dem Logarithmuswert im Nenner und/oder Zähler eine Konstante addiert und/oder der Logarithmuswert im Nenner und/oder Zähler mit einer Konstante multipliziert bzw. dividiert wird. Bei dieser Gelegenheit wird ferner nochmals darauf hingewiesen, dass die vorliegende Erfindung nicht nur auf Fälle der Transmission begrenzt ist. Reflexionskoeffizienten können ähnliche Effekte hervorrufen, wie die im Vorhergehenden beschriebene Strahlaufhärtung. In diesem Fall ist das "Lambert'sche Schwächungsgesetz", das für die Absorption, aber nicht für die Reflexion gilt, nicht anwendbar, und somit könnte ein anderes Verhältnis aus Werten, die auf den Intensitätswerten $I_1$ und $I_2$ basieren, als Q-Wert verwendet werden oder einer anderer kombinationswert auf den Einzelintensitäten $I_1$ und $I_2$. Insbesondere entfiele der Logarithmus im Zähler und Nenner.

Ferner wird darauf hingewiesen, dass es für die vorliegende Erfindung nicht wesentlich ist, ob die polychroamtische Strahlung ein kontinuierliches Spektrum oder ein diskontinuierliches Spektrum umfasst. Wesentlich ist lediglich, dass das effektive Spektrum zumindest zwei Spektrallinien bzw. zwei Strahlungsfrequenzen aufweist. Diese zumindest zwei Strahlungsfrequenzen weisen vorzugsweise zumindest einen Abstand auf, der größer ist als 5%, 10% oder mehr einer Mittenfrequenz des effektiv wirksamen Spektrums, d.h. des Produkts aus zur Bestrahlung verwendeten Spektrums und Empfindlichkeitskennlinie, oder mehr als 5% oder 10% als die niedrigere der beiden Strahlungsfrequenzen. In diesem Zusammenhang soll Strahlungsfrequenz bei Teilchenstrahlung, wie z.B. im Fall von thermischen Neutronen, die der Energie der entsprechenden Teilchen entsprechende Frequenz nach dem Welle-Teilchen-Dualismus bedeuten.

Die vorhergehenden Ausführungsbeispiele zeigten folglich, anders ausgedrückt, eine Vorrichtung bzw. ein Verfahren zur automatischen, berührungslosen Bestimmung von Materialien unter Einsatz von industriellen Röntgenquellen mit einer Einrichtung zum Erzeugen von Röntgendurchstrahlungsbildern bei unterschiedlichen Röntgenquellen-Beschleunigungsspannungen und unterschiedlicher Empfindlichkeit für hohe und niedrigere Röntgenenergien, eine Einrichtung zur Erzeugung und Speicherung von Kalibrierdaten anhand von bekannten Materialien, eine Einrichtung zur Berechnung der Wertetripel und eine Einrichtung zur Berechnung des kleinsten numerischen Abstands der berechneten Wertetripel zu gespeicherten Materialkennlinien.

Insbesondere wird darauf hingewiesen, dass abhängig von den Gegebenheiten das erfindungsgemäße Schema zur Metrialerkennung bzw. Klassifizierung auch in Software implementiert sein kann. Die Implementation kann auf einem digitalen Speichermedium, insbesondere einer Diskette oder einer CD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner abläuft. In anderen Worten ausgedrückt kann die Erfindung somit als ein Computerprogramm mit einem Programmcode zur Durchführung des Verfahrens realisiert werden, wenn das Computerprogramm auf einem Computer abläuft.

**Patentansprüche**

1. Vorrichtung zur Bestimmung eines Objektmaterials, aus dem ein Objekt (118) besteht, mit folgenden Merkmalen:

   eine Einrichtung (102) zum Bestrahlen des Objekts (118) und Empfangen einer sich ergebenden durch das Objekt (118) transmittierten oder von dem Objekt (118) reflektierten Strahlung mit einem ersten polyfrequenten effektiven Spektrum, um einen ersten Intensitätswert zu erhalten, und zum Bestrahlen des Objekts (118) und Empfangen einer sich ergebenden durch das Objekt (118) transmittierten oder von dem Objekt (188) reflektierten Strahlung mit einem zweiten polyfrequenten effektiven Spektrum, um einen zweiten Intensitätswert zu erhalten, wobei sich das erste polyfrequente effektive Spektrum von dem zweiten polyfrequenten effektiven Spektrum unterscheidet;
   eine Einrichtung (122) zum Bereitstellen von Referenzdaten für eine Mehrzahl von vorbestimmten Materialien; und
   eine Einrichtung (120) zum Zuordnen des Objektmaterials einem der vorbestimmten Materialien anhand der Referenzdaten, eines auf dem ersten und dem zweiten Intensitätswert basierenden Kombinationswertes sowie zumindest des ersten oder zweiten Intensitätswerts,

   wobei die Einrichtung zum Bereitstellen ausgebildet ist, um für jedes vorbestimmte Material eine Kennlinie zu speichern, die Werten für den zumindest ersten und/oder zweiten Intensitätswert jeweils einen Wert für den auf dem ersten und dem zweiten Intensitätswert basierenden Kombinationswert zuordnet, und
   wobei die Einrichtung zum Zuordnen eine Einrichtung zum Bestimmen, zu welcher der Kennlinien ein Vektor aus dem Kombinationswert sowie dem ersten und/oder zweiten Intensitätswert oder eine Mehrzahl von aus einer Mehrzahl von Bestrahlung/Erfassungen an dem Objekt durch die Einrichtung zum Bestrahlen und Erfassen erhaltenen Vektoren aus Kombinationswert und erstem und/oder zweitem Intensitätswert am nächsten liegt, aufweist.

2. Vorrichtung gemäß Anspruch 1, bei der die Einrichtung (102) zum Bestrahlen und Empfangen folgende Merkmale aufweist:

   eine erste Strahlungsquelle (104) zum Bestrahlen des Objekts (118) mit polyfrequenter Strahlung mit einem ersten polyfrequenten Spektrum; und
   einen ersten Sensor (106a) zum Erfassen einer sich ergebenden durch das Objekt (118) transmittierten oder von dem Objekt (118) reflektierten Strahlung, wobei der erste Sensor (106a) zumindest an zwei Strahlungsfrequenzen innerhalb des ersten polyfrequenten Strahlungsspektrums empfindlich ist.

3.  Vorrichtung gemäß Anspruch 2, bei der die zwei Strahlungsfrequenzen um mehr als 5% einer Mittenfrequenz des Strahlungsspektrums beabstandet sind.

4.  Vorrichtung gemäß Anspruch 2 oder 3, bei der die Strahlungsquelle und der Sensor derart angeordnet sind, dass der Sensor die sich ergebende durch das Objekt transmittierte Strahlung erfasst.

5.  Vorrichtung gemäß einem der Ansprüche 2 bis 4, bei der die Einrichtung zum Bestrahlen und Empfangen ferner folgendes Merkmal aufweist:

    eine zweite Strahlungsquelle zum Bestrahlen des Objekts mit polyfrequenter Strahlung mit einem zweiten polyfrequenten Strahlungsspektrum, wobei der erste Sensor ebenfalls zumindest an zwei Strahlungsfrequenzen innerhalb des zweiten Strahlungsspektrums empfindlich ist, die sich von den zwei Strahlungsfrequenzen innerhalb des ersten Strahlungsspektrums unterscheiden.

6.  Vorrichtung gemäß einem der Ansprüche 2 bis 4, bei der die Einrichtung zum Bestrahlen und Empfangen ferner folgende Merkmale aufweist:

    eine zweite Strahlungsquelle zum Bestrahlen des Objekts mit polyfrequenter Strahlung mit einem zweiten polyfrequenten Strahlungsspektrum; und
    einen zweiten Sensor zum Erfassen einer sich ergebenden durch das Objekt transmittierte oder von dem Objekt reflektierten Strahlung,

    wobei der zweite Sensor zumindest an zwei Strahlungsfrequenzen innerhalb des zweiten Strahlungsspektrums empfindlich ist, die sich von den zwei Strahlungsfrequenzen innerhalb des ersten Strahlungsspektrums unterscheiden.

7.  Vorrichtung gemäß einem der Ansprüche 2 bis 4, bei der die Einrichtung zum Bestrahlen und Empfangen ferner folgendes Merkmal aufweist:

    einen zweiten Sensor zum Erfassen einer sich ergebenden durch das Objekt tranmittierten oder von dem Objekt reflektierten Strahlung,

    wobei der zweite Sensor zumindest an zwei Strahlungsfrequenzen innerhalb des ersten Strahlungsspektrums empfindlich ist, die sich von den zwei Strahlungsfrequenzen innerhalb des ersten Strahlungsspektrums, an denen der erste Sensor empfindlich ist, unterscheiden.

8.  Vorrichtung gemäß einem der Ansprüche 2 bis 4, bei der die Einrichtung zum Bestrahlen und Empfangen ferner folgendes Merkmal aufweist:

    einen zweiten Sensor zum Erfassen einer sich ergebenden durch das Objekt tranmittierten oder von dem Objekt reflektierten Strahlung,

    wobei sich der erste von dem zweiten Sensor in einem Erfassungsmaterial unterscheidet, oder der erste und der zweite Sensor direktkonvertierende Detektoren mit unterschiedlichen Diskriminatoren sind.

9.  Vorrichtung gemäß einem der Ansprüche 2 bis 8, bei der die erste Strahlungsquelle umstellbar ist, um entweder mit polyfrequenter Strahlung mit dem ersten polyfrequenten Spektrum oder mit polyfrequenter Strahlung mit einem zweiten polyfrequenten Spektrum das Objekt zu bestrahlen, wobei die Vorrichtung ferner folgendes Merkmal aufweist:

    eine Einrichtung zum Umschalten der ersten Strahlungsquelle, um wahlweise das Objekt mit polyfrequenter Strahlung mit dem ersten polyfrequenten Spektrum oder mit polyfrequenter Strahlung mit dem zweiten polyfrequenten Spektrum zum Bestrahlen.

10. Vorrichtung gemäß einem der Ansprüche 2 bis 9, bei der die Einrichtung zum Bestrahlen und Empfangen ferner folgendes Merkmal aufweist:

    einen Filtersatz mit zwei Filtern zum Filtern der polyfrequenten Strahlung auf dem Weg von der ersten Strahlungsquelle zu dem ersten Sensor; und

eine Einrichtung zum wahlweisen Anordnen entweder des ersten oder des zweiten Filters in einen Strahlengang zwischen der ersten Strahlungsquelle und dem ersten Sensor, wobei sich die beiden Filter in einer Filtercharakteristik unterscheiden.

11. Vorrichtung gemäß einem der vorhergehenden Ansprüche, bei der die Einrichtung zum Bestrahlen und Empfangen eine Röntgenquelle, eine thermische-Neutronen-Quelle, eine Terrahertz-Strahlungsquelle oder eine Lichtquelle als eine Strahlungsquelle umfasst.

12. Vorrichtung gemäß einem der vorhergehenden Ansprüche, bei der die Einrichtung zum Bestimmen und Empfangen einen Röntgendetektor als Sensor aufweist.

13. Vorrichtung gemäß einem der vorhergehenden Ansprüche, bei der die Einrichtung zum Zuordnen ausgebildet ist, um den auf dem ersten und dem zweiten Intensitätswert basierenden Kombinationswert auf eine feste Art und Weise zu ermitteln.

14. Vorrichtung gemäß einem der vorhergehenden Ansprüche, bei der die Einrichtung zum Zuordnen ausgebildet ist, um den Kombinationswert als einen Quotienten aus einem auf dem ersten Intensitätswert basierenden Wert und einem auf dem zweiten Intensitätswert basierenden Wert in fester Art und Weise zu ermitteln.

15. Vorrichtung gemäß einem der vorhergehenden Ansprüche, bei der die Einrichtung zum Zuordnen ausgebildet ist, um den Kombinationswert als einem Verhältnis zwischen einem Logarithmus des ersten Intensitätswertes und einem Logarithmus des zweiten Intensitätswertes zu ermitteln.

16. Vorrichtung gemäß einem der vorhergehenden Ansprüche, bei der die Einrichtung zum Bestrahlen und Empfangen ausgebildet ist, um zu dem Objekt eine Mehrzahl von Paaren aus erstem und zweitem Intensitätswert zu erhalten, und die Einrichtung zum Zuordnen ausgebildet ist, um die Zuordnung anhand der Referenzdaten, auf den Paaren von erstem und zweitem Intensitätswert basierenden Kombinationswerten und zumindest dem ersten oder zweiten Intensitätswert der Paare von erstem und zweitem Intensitätswert durchzuführen.

17. Verfahren zur Bestimmung eines Objektmaterials, aus dem ein Objekt (118) besteht, mit folgenden Schritten:

Bestrahlen des Objekts (118) und Empfangen einer sich ergebenden durch das Objekt (118) transmittierten oder von dem Objekt (118) reflektierten Strahlung mit einem ersten polyfrequenten effektiven Spektrum, um einen ersten Intensitätswert zu erhalten;

Bestrahlen des Objekts (118) und Empfangen einer sich ergebenden durch das Objekt (118) transmittierten oder von dem Objekt (188) reflektierten Strahlung mit einem zweiten polyfrequenten effektiven Spektrum, um einen zweiten Intensitätswert zu erhalten, wobei sich das erste polyfrequente effektive Spektrum von dem zweiten polyfrequenten effektiven Spektrum unterscheidet;

Bereitstellen von Referenzdaten für eine Mehrzahl von vorbestimmten Materialien; und

Zuordnen des Objektmaterials einem der vorbestimmten Materialien anhand der Referenzdaten, eines auf dem ersten und dem zweiten Informationswert basierenden Kombinationswertes sowie zumindest des ersten oder zweiten Intensitätswerts,

wobei der Schritt des Bereitstellens derart durchgeführt wird, dass für jedes vorbestimmte Material eine Kennlinie gespeichert wird, die Werten für den zumindest ersten und/oder zweiten Intensitätswert jeweils einen Wert für den auf dem ersten und dem zweiten Intensitätswert basierenden Kombinationswert zuordnet, und

wobei der Schritt des Zuordnens den Schritt des Bestimmens, zu welcher der Kennlinien ein Vektor aus dem Kombinationswert sowie dem ersten und/oder zweiten Intensitätswert oder eine Mehrzahl von aus einer Mehrzahl von Bestrahlung/Erfassungen an dem Objekt erhaltenen Vektoren aus Kombinationswert und erstem und/oder zweitem Intensitätswert am nächsten liegt, aufweist.

18. Computer-Programm mit einem Programmcode zur Durchführung, wenn das Computer-Programm auf einem Computer abläuft, eines Verfahrens zur Bestimmung eines Objektmaterials, aus dem ein Objekt (118) besteht, mit folgenden Schritten:

Bestrahlen des Objekts (118) und Empfangen einer sich ergebenden durch das Objekt (118) transmittierten oder von dem Objekt (118) reflektierten Strahlung mit einem ersten polyfrequenten effektiven Spektrum, um einen ersten Intensitätswert zu erhalten;

Bestrahlen des Objekts (118) und Empfangen einer sich ergebenden durch das Objekt (118) transmittierten oder von dem Objekt (188) reflektierten Strahlung mit einem zweiten polyfrequenten effektiven Spektrum, um einen zweiten Intensitätswert zu erhalten, wobei sich das erste polyfrequente effektive Spektrum von dem zweiten polyfrequenten effektiven Spektrum unterscheidet;

Bereitstellen von Referenzdaten für eine Mehrzahl von vorbestimmten Materialien; und

Zuordnen des Objektmaterials einem der vorbestimmten Materialien anhand der Referenzdaten, eines auf dem ersten und dem zweiten Informationswert basierenden Kombinationswertes sowie zumindest des ersten oder zweiten Intensitätswerts,

wobei der Schritt des Bereitstellens derart durchgeführt wird, dass für jedes vorbestimmte Material eine Kennlinie gespeichert wird, die Werten für den zumindest ersten und/oder zweiten Intensitätswert jeweils einen Wert für den auf dem ersten und dem zweiten Intensitätswert basierenden Kombinationswert zuordnet, und

wobei der Schritt des Zuordnens den Schritt des Bestimmens, zu welcher der Kennlinien ein Vektor aus dem Kombinationswert sowie dem ersten und/oder zweiten Intensitätswert oder eine Mehrzahl von aus einer Mehrzahl von Bestrahlung/Erfassungen an dem Objekt erhaltenen Vektoren aus Kombinationswert und erstem und/oder zweitem Intensitätswert am nächsten liegt, aufweist.

**Claims**

1. Apparatus for determining of an object material of which an object (118) consists, comprising:

   a means (102) for irradiating the object (118) and receiving a resulting radiation with a first polyfrequent effective spectrum, transmitted through the object (118) or reflected from the object (118), in order to obtain a first intensity value, and for irradiating the object (118) and receiving a resulting radiation with a second polyfrequent effective spectrum, transmitted through the object (118) or reflected from the object (188), in order to obtain a second intensity value, wherein the first polyfrequent effective spectrum differs from the second polyfrequent effective spectrum;

   a means (122) for providing reference data for a plurality of predetermined materials; and

   a means (120) for associating the object material with one of the predetermined materials on the basis of the reference data, a combination value based on the first and the second intensity value, as well as at least the first or second intensity value,

   wherein the means for providing is formed to store, for each predetermined material, a characteristic curve associating a value each for the combination value based on the first and the second intensity value with values for at least the first and/or second intensity value, and

   wherein the means for associating comprises a means for determining to which of the characteristic curves a vector of the combination value as well as the first and/or second intensity value, or a plurality of vectors of the combination value and the first and/or second intensity value, obtained from a plurality of irradiations/detections on the object by the means for irradiating and sensing, lies closest.

2. Apparatus of claim 1, wherein the means (102) for irradiating and receiving comprises:

   a first radiation source (104) for irradiating the object (118) with polyfrequent radiation with a first polyfrequent spectrum; and

   a first sensor (106a) for sensing a resulting radiation transmitted through the object (118) or reflected from the object (118), wherein the first sensor (106a) is sensitive to at least two radiation frequencies within the first polyfrequent radiation spectrum.

3. Apparatus of claim 2, wherein the two radiation frequencies are spaced apart by more than 5 % of a center frequency of the radiation spectrum.

4. Apparatus of claim 2 or 3, wherein the radiation source and the sensor are arranged such that the sensor senses the resulting radiation transmitted through the object.

5. Apparatus of one of claims 2 to 4, wherein the means for irradiating and receiving further comprises:

a second radiation source for irradiating the object with polyfrequent radiation with a second polyfrequent spectrum, wherein the first sensor is also sensitive at least at two radiation frequencies within the second radiation spectrum which differ from the two radiation frequencies within the first radiation spectrum.

6. Apparatus of one of claims 2 to 4, wherein the means for irradiating and receiving further comprises:

a second radiation source for irradiating the object with polyfrequent radiation with a second polyfrequent radiation spectrum; and
a second sensor for sensing a resulting radiation transmitted through the object or reflected from the object,

wherein the second sensor is sensitive at least at two radiation frequencies within the second radiation spectrum which differ from the two radiation frequencies within the first radiation spectrum.

7. Apparatus of one of claims 2 to 4, wherein the means for irradiating and receiving further comprises:

a second sensor for sensing a resulting radiation transmitted through the object or reflected from the object,

wherein the second sensor is sensitive at least at two radiation frequencies within the first radiation spectrum which differ from the two radiation frequencies within the first radiation spectrum at which the first sensor is sensitive.

8. Apparatus of one of claims 2 to 4, wherein the means for irradiating and receiving further comprises:

a second sensor for sensing a resulting radiation transmitted through the object or reflected from the object,

wherein the first sensor differs from the second one in a sensing material, or the first and the second sensor are directly converting detectors with different discriminators.

9. Apparatus of one of claims 2 to 8, wherein the first radiation source is switchable so as to irradiate the object either with polyfrequent radiation with the first polyfrequent spectrum or with polyfrequent radiation with a second polyfrequent spectrum, the apparatus further comprising:

a means for switching the first radiation source so as to irradiate the object selectively with polyfrequent radiation with the first polyfrequent spectrum or with polyfrequent radiation with the second polyfrequent spectrum.

10. Apparatus of one of claims 2 to 9, wherein the means for irradiating and receiving further comprises:

a filter set with two filters for filtering the polyfrequent radiation on the way from the first radiation source to the first sensor; and
a means for selectively arranging either the first or the second filter into an optical train between the first radiation source and the first sensor, wherein the two filters differ in a filter characteristic.

11. Apparatus of one of the preceding claims, wherein the means for irradiating and receiving includes an X-ray source, a thermal neutron source, a terahertz radiation source, or a light source as a radiation source.

12. Apparatus of one of the preceding claims, wherein the means for irradiating and receiving comprises an X-ray detector as sensor.

13. Apparatus of one of the preceding claims, wherein the means for associating is formed to ascertain the combination value based on the first and the second intensity value in a fixed manner.

14. Apparatus of one of the preceding claims, wherein the means for associating is formed to ascertain the combination value as a quotient of a value based on the first intensity value and a value based on the second intensity value in fixed manner.

15. Apparatus of one of the preceding claims, wherein the means for associating is formed to ascertain the combination value as a ratio between a logarithm of the first intensity value and a logarithm of the second intensity value.

16. Apparatus of one of the preceding claims, wherein the means for irradiating and receiving is formed to obtain a plurality of pairs of the first and the second intensity value for the object, and the means for associating is formed to perform the association on the basis of the reference data, combination values based on the pairs of the first and the second intensity value, and at least the first or second intensity value of the pairs of the first and the second intensity value.

**17.** Method of determining an object material of which an object (118) consists, comprising the steps of:

irradiating the object (118) and receiving a resulting radiation with a first polyfrequent effective spectrum, transmitted through the object (118) or reflected from the object (118), in order to obtain a first intensity value; irradiating the object (118) and receiving a resulting radiation with a second polyfrequent effective spectrum, transmitted through the object (118) or reflected from the object (188), in order to obtain a second intensity value, wherein the first polyfrequent effective spectrum differs from the second polyfrequent effective spectrum; providing reference data for a plurality of predetermined materials; and associating the object material with one of the predetermined materials on the basis of the reference data, a combination value based on the first and the second information value, as well as at least the first or second intensity value,

wherein the step of providing is performed such that, for each predetermined material, a characteristic curve associating a value each for the combination value based on the first and the second intensity value with values for at least the first and/or second intensity value is stored, and wherein the step of associating comprises the step of determining to which of the characteristic curves a vector of the combination value as well as the first and/or second intensity value, or a plurality of vectors of the combination value and the first and/or second intensity value, obtained from a plurality of irradiations/detections on the object by the means for irradiating and sensing, lies closest.

**18.** Computer program with program code for performing, when the computer program is executed on a computer, a method of determining an object material of which an object (118) consists, comprising the steps of:

irradiating the object (118) and receiving a resulting radiation with a first polyfrequent effective spectrum, transmitted through the object (118) or reflected from the object (118), in order to obtain a first intensity value; irradiating the object (118) and receiving a resulting radiation with a second polyfrequent effective spectrum, transmitted through the object (118) or reflected from the object (188), in order to obtain a second intensity value, wherein the first polyfrequent effective spectrum differs from the second polyfrequent effective spectrum; providing reference data for a plurality of predetermined materials; and associating the object material with one of the predetermined materials on the basis of the reference data, a combination value based on the first and the second information value, as well as at least the first or second intensity value,

wherein the step of providing is performed such that, for each predetermined material, a characteristic curve associating a value each for the combination value based on the first and the second intensity value with values for at least the first and/or second intensity value is stored, and wherein the step of associating comprises the step of determining to which of the characteristic curves a vector of the combination value as well as the first and/or second intensity value, or a plurality of vectors of the combination value and the first and/or second intensity value, obtained from a plurality of irradiations/detections on the object by the means for irradiating and sensing, lies closest.

**Revendications**

**1.** Dispositif de détermination d'un matériau d'objet dans lequel est réalisé un objet (118), aux caractéristiques suivantes:

un moyen (102) destiné à irradier l'objet (118) et à recevoir un rayonnement résultant transmis par l'objet (118) ou réfléchi par l'objet (118) avec un premier spectre effectif de fréquences multiples, pour obtenir une première valeur d'intensité, et à irradier l'objet (118) et à recevoir un rayonnement résultant transmis par l'objet (118) ou réfléchi par l'objet (118) avec un deuxième spectre effectif de fréquences multiples, pour obtenir une deuxième valeur d'intensité, le premier spectre effectif de fréquences multiples différant du deuxième spectre effectif de fréquences multiples;

un moyen (122) destiné à mettre à disposition des données de référence pour une pluralité de matériaux prédéterminés; et

un moyen (120) destiné à associer le matériau d'objet à l'un des matériaux prédéterminés sur base des données de référence, d'une valeur de combinaison basée sur la première et la deuxième valeur d'intensité ainsi que d'au moins la première ou la deuxième valeur d'intensité,

le moyen destiné à mettre à disposition étant réalisé de manière à mémoriser, pour chaque matériau prédéterminé, une courbe caractéristique qui associe à chacune des valeurs pour l'au moins première et/ou deuxième valeur d'intensité une valeur pour la valeur de combinaison basée sur la première et la deuxième valeur d'intensité, et

le moyen destiné à associer présentant un moyen destiné à déterminer celle parmi les courbes caractéristiques de laquelle se rapproche le plus un vecteur formé à partir de la valeur de combinaison ainsi que de la première et/ou de la deuxième valeur d'intensité ou une pluralité de vecteurs formés à partir de la valeur de combinaison ainsi que de la première et/ou de la deuxième valeur d'intensité obtenus à partir d'une pluralité d'irradiations/détections à l'objet par le moyen destiné à irradier et à détecter.

2. Dispositif selon la revendication 1, dans lequel le moyen (102) destiné à irradier et à recevoir présente les caractéristiques suivantes:

une première source de rayonnement (104) destinée à irradier l'objet (118) par un rayonnement à fréquences multiples avec un premier spectre de fréquences multiples; et

un premier capteur (106a) destiné à détecter un rayonnement résultant transmis par l'objet (118) ou réfléchi par l'objet (118), le premier capteur (106a) étant sensible à au moins deux fréquences de rayonnement dans le premier spectre de rayonnement à fréquences multiples.

3. Dispositif selon la revendication 2, dans lequel les deux fréquences de rayonnement sont distantes de plus de 5% d'une fréquence moyenne du spectre de rayonnement.

4. Dispositif selon la revendication 2 ou 3, dans lequel la source de rayonnement et le capteur sont disposés de sorte que le capteur détecte le rayonnement résultant transmis par l'objet.

5. Dispositif selon l'une des revendications 2 à 4, dans lequel le moyen destiné à irradier et à recevoir présente, par ailleurs, la caractéristique suivante:

une deuxième source de rayonnement destinée à irradier l'objet par un rayonnement à fréquences multiples avec un deuxième spectre de rayonnement à fréquences multiples, le premier capteur étant également sensible à au moins deux fréquences de rayonnement dans le deuxième spectre de rayonnement qui diffèrent des deux fréquences de rayonnement dans le premier spectre de rayonnement.

6. Dispositif selon l'une des revendications 2 à 4, dans lequel le moyen destiné à irradier et à recevoir présente, par ailleurs, les caractéristiques suivantes:

une deuxième source de rayonnement destinée à irradier l'objet par un rayonnement à fréquences multiples avec un deuxième spectre de rayonnement à fréquences multiples; et

un deuxième capteur destiné à détecter un rayonnement résultant transmis par l'objet ou réfléchi par l'objet, le deuxième capteur étant sensible à au moins deux fréquences de rayonnement dans le deuxième spectre de rayonnement qui diffèrent des deux fréquences de rayonnement dans le premier spectre de rayonnement.

7. Dispositif selon l'une des revendications 2 à 4, dans lequel le moyen destiné à irradier et à recevoir présente, par ailleurs, la caractéristique suivante:

un deuxième capteur destiné à détecter un rayonnement résultant transmis par l'objet ou réfléchi par l'objet, le deuxième capteur étant sensible à au moins deux fréquences de rayonnement dans le premier spectre de rayonnement qui diffèrent des deux fréquences de rayonnement dans le premier spectre de rayonnement auxquelles est sensible le premier capteur.

8. Dispositif selon l'une des revendications 2 à 4, dans lequel le moyen destiné à irradier et à recevoir présente, par ailleurs, la caractéristique suivante:

**EP 1 711 800 B1**

un deuxième capteur destiné à détecter un rayonnement résultant transmis par l'objet ou réfléchi par l'objet, le premier capteur différant du deuxième capteur en ce qui concerne un matériau de détection, ou le premier et le deuxième capteur étant des détecteurs à conversion directe à discriminateurs différents.

9. Dispositif selon l'une des revendications 2 à 8, dans lequel la première source de rayonnement est convertissable, pour irradier l'objet soit par un rayonnement à fréquences multiples avec le premier spectre de fréquences multiples, soit par un rayonnement à fréquences multiples avec un deuxième spectre de fréquences multiples, le dispositif présentant, par ailleurs, la caractéristique suivante:

   un moyen destiné à commuter la première source de rayonnement, pour irradier l'objet alternativement par un rayonnement à fréquences multiples avec le premier spectre de fréquences multiples ou par un rayonnement à fréquences multiples avec le deuxième spectre de fréquences multiples.

10. Dispositif selon l'une des revendications 2 à 9, dans lequel le moyen destiné à irradier et à recevoir présente, par ailleurs, la caractéristique suivante:

   un ensemble de filtres avec deux filtres destinés à filtrer le rayonnement à fréquences multiples sur le trajet de la première source de rayonnement au premier capteur; et
   un moyen destiné à disposer alternativement soit le premier, soit le deuxième filtre dans un trajet de rayons entre la première source de rayonnement et le premier capteur, les deux filtres différant en ce qui concerne une caractéristique de filtre.

11. Dispositif selon l'une des revendications précédentes, dans lequel le moyen destiné à irradier et à recevoir comporte une source de rayons X, une source de neutrons thermique, une source de rayonnement terrahertz ou une source de lumière comme source de rayonnement.

12. Dispositif selon l'une des revendications précédentes, dans lequel le moyen destiné à irradier et à recevoir présente un détecteur de rayons X comme capteur.

13. Dispositif selon l'une des revendications précédentes, dans lequel le moyen destiné à associer est réalisé de manière à déterminer de manière fixe la valeur de combinaison basée sur la première et la deuxième valeur d'intensité.

14. Dispositif selon l'une des revendications précédentes, dans lequel le moyen destiné à associer est réalisé de manière à déterminer de manière fixe la valeur de combinaison comme quotient d'une valeur basée sur la première valeur d'intensité et une valeur basée sur la deuxième valeur d'intensité.

15. Dispositif selon l'une des revendications précédentes, dans lequel le moyen destiné à associer est réalisé de manière à déterminer la valeur de combinaison comme rapport entre un logarithme de la première valeur d'intensité et un logarithme de la deuxième valeur d'intensité.

16. Dispositif selon l'une des revendications précédentes, dans lequel le moyen destiné à irradier et à recevoir est réalisé de manière à recevoir pour l'objet une pluralité de paires composées d'une première et d'une deuxième valeur d'intensité, et le moyen destiné à associer est réalisé de manière à effectuer l'association sur base des données de référence, des valeurs de combinaison basées sur les paires composées d'une première et d'une deuxième valeur d'intensité et d'au moins la première ou la deuxième valeur d'intensité des paires composées d'une première et d'une deuxième valeur d'intensité.

17. Procédé de détermination d'un matériau d'objet duquel se compose un objet (118), aux étapes suivantes consistant à:

   irradier l'objet (118) et recevoir un rayonnement résultant transmis par l'objet (118) ou réfléchi par l'objet (118) avec un premier spectre effectif de fréquences multiples, pour obtenir une première valeur d'intensité ;
   irradier l'objet (118) et recevoir un rayonnement résultant transmis par l'objet (118) ou réfléchi par l'objet (118) avec un deuxième spectre effectif de fréquences multiples, pour obtenir une deuxième valeur d'intensité, le premier spectre effectif de fréquences multiples différant du deuxième spectre effectif de fréquences multiples;
   mettre à disposition des données de référence pour une pluralité de matériaux prédéterminés; et
   associer le matériau d'objet à l'un des matériaux prédéterminés sur base des données de référence, d'une valeur de combinaison basée sur la première et la deuxième valeur d'intensité ainsi que d'au moins la première ou la deuxième valeur d'intensité,

l'étape consistant à mettre à disposition étant réalisée de manière à mémoriser, pour chaque matériau prédéterminé, une courbe caractéristique qui associe à chacune des valeurs pour l'au moins première et/ ou deuxième valeur d'intensité une valeur pour la valeur de combinaison basée sur la première et la deuxième valeur d'intensité, et

l'étape consistant à associer présentant l'étape consistant à déterminer celle parmi les courbes caractéristiques de laquelle se rapproche le plus un vecteur formé à partir de la valeur de combinaison ainsi que de la première et/ou de la deuxième valeur d'intensité ou une pluralité de vecteurs formés à partir de la valeur de combinaison et de la première et/ou de la deuxième valeur d'intensité obtenus à partir d'une pluralité d'irradiations/détections à l'objet.

**18.** Programme d'ordinateur avec un code de programme pour la mise en oeuvre, lorsque le programme d'ordinateur est exécuté sur un ordinateur, d'un procédé de détermination d'un matériau d'objet duquel se compose un objet (118), aux étapes suivantes consistant à:

irradier l'objet (118) et recevoir un rayonnement résultant transmis par l'objet (118) ou réfléchi par l'objet (118) avec un premier spectre effectif de fréquences multiples, pour obtenir une première valeur d'intensité;

irradier l'objet (118) et recevoir un rayonnement résultant transmis par l'objet (118) ou réfléchi par l'objet (118) avec un deuxième spectre effectif de fréquences multiples, pour obtenir une deuxième valeur d'intensité, le premier spectre effectif de fréquences multiples différant du deuxième spectre effectif de fréquences multiples;

mettre à disposition des données de référence pour une pluralité de matériaux prédéterminés; et

associer le matériau d'objet à l'un des matériaux prédéterminés sur base des données de référence, d'une valeur de combinaison basée sur la première et la deuxième valeur d'intensité ainsi que d'au moins la première ou la deuxième valeur d'intensité,

l'étape consistant à mettre à disposition étant réalisée de manière à mémoriser, pour chaque matériau prédéterminé, une courbe caractéristique qui associe à chacune des valeurs pour l'au moins première et/ou deuxième valeur d'intensité une valeur pour la valeur de combinaison basée sur la première et la deuxième valeur d'intensité, et

l'étape consistant à associer présentant l'étape consistant à déterminer celle parmi les courbes caractéristiques de laquelle se rapproche le plus un vecteur formé à partir de la valeur de combinaison ainsi que de la première et/ou de la deuxième valeur d'intensité ou une pluralité de vecteurs formés à partir de la valeur de combinaison et de la première et/ou de la deuxième valeur d'intensité obtenus à partir d'une pluralité d'irradiations/détections à l'objet.

# FIG 1

Legend: ◆ Alu-Guss   ■ Alu 99,5%   ✕ AlMgSi

Y-axis: Q (1, 1,05, 1,1, 1,15, 1,2, 1,25)
X-axis: DICKE [mm] (0, 2, 4, 6, 8, 10, 12)

# FIG 2

Legend: ◆ Alu-Guss   ■ Alu 99,5%   ✕ AlMgSi

Y-axis: Q (1, 1,05, 1,1, 1,15, 1,2, 1,25)
X-axis: NORMIERTE INTENSITÄT BEI 100kV   $(I_1)$ (0, 0.1, 0.2, 0.3, 0.4, 0.5, 0.6, 0.7, 0.8, 0.9, 1)

## FIG 4

BEREITSTELLEN VON KENNLINIEN ZU VORBESTIMMTEN MATERIALIEN

UNTERSUCHEN DES OBJEKTES MIT EINEM ERSTEN EFFEKTIVEN POLYCHROMATISCHEN SPEKTRUM, UM $I_1$ ZU ERHALTEN

UNTERSUCHEN DES OBJEKTES MIT EINEM ZWEITEN EFFEKTIVEN POLYCHROMATISCHEN SPEKTRUM, UM $I_2$ ZU ERHALTEN

ERMITTELN DES WERTETUPELS $\left( \dfrac{\ln I_1}{\ln I_2}, \ I_i \right)$ MIT i=1 ODER 2

KLASSIFIZIEREN DES OBJEKTMATERIALS ANHAND VON KENNLINIEN VORBESTIMMTER MATERIALIEN UND DEM WERTETUPEL

## FIG 3A

## FIG 3B

## FIG 3C

FIG 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0250521 A2
- US 5838758 A